(19)

Europäisches Patentamt

European Patent Office

Office européen des brevets

(11) **EP 4 622 257 A1**

(12) **EUROPEAN PATENT APPLICATION**
published in accordance with Art. 153(4) EPC

(43) Date of publication:
**24.09.2025 Bulletin 2025/39**

(21) Application number: 23890813.1

(22) Date of filing: **15.11.2023**

(51) International Patent Classification (IPC):
$H04N\ 19/146^{(2014.01)}$  $H04N\ 19/176^{(2014.01)}$
$H04N\ 19/124^{(2014.01)}$  $H04N\ 19/184^{(2014.01)}$

(86) International application number:
**PCT/CN2023/131803**

(87) International publication number:
**WO 2024/104382 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022  CN 202211448399**

(71) Applicant: Hangzhou Hikvision Digital Technology Co., Ltd.
**Hangzhou, Zhejiang 310051 (CN)**

(72) Inventors:
• WANG, Yan
  **Hangzhou, Zhejiang 310051 (CN)**
• SUN, Yucheng
  **Hangzhou, Zhejiang 310051 (CN)**
• PAN, Dongping
  **Hangzhou, Zhejiang 310051 (CN)**
• CHEN, Fangdong
  **Hangzhou, Zhejiang 310051 (CN)**
• WU, Xiaoyang
  **Hangzhou, Zhejiang 310051 (CN)**

(74) Representative: Epping - Hermann - Fischer Patentanwaltsgesellschaft mbH
**Schloßschmidstraße 5
80639 München (DE)**

(54) **IMAGE ENCODING METHOD AND APPARATUS, IMAGE DECODING METHOD AND APPARATUS, AND STORAGE MEDIUM**

(57)    Provided in the present application are an image encoding method and apparatus, an image decoding method and apparatus, and a storage medium. The image encoding method comprises: acquiring the state of a code stream buffer area; when the state of the code stream buffer area meets a preset condition, executing a first operation on an estimated number of bits of the current block to be encoded, or, executing a second operation on an estimated quantization parameter of said current block, wherein the first operation refers to reducing a penalty number of bits from the estimated number of bits, the estimated quantization parameter is obtained on the basis of the estimated number of bits, the second operation refers to adding a reference quantization parameter to the estimated quantization parameter, and the reference quantization parameter is obtained on the basis of the penalty number of bits; and encoding said current block on the basis of the estimated number of bits after the first operation is executed, or, on the basis of the estimated quantization parameter after the second operation is executed.

Fig.7

# EP 4 622 257 A1

## Description

### Related Application

The present application claims the priority to a Chinese patent application No. 202211448399.0 filed with the China National Intellectual Property Administration (CNIPA) on November 18th, 2022, which is incorporated herein by reference in its entirety.

### Technical Field

The present application relates to the technical field of image encoding and decoding, and in particular to an image encoding method and apparatus, an image decoding method and apparatus, and a storage medium.

### Background

In the scene of high-speed video transmission interface, hardware resources are limited, overly complex code control algorithms cannot be used, but too simple code control algorithms are difficult to achieve lossless compression.
In order to solve this problem, a code rate of a current block can be controlled by using relevant information of a historical block. For example, taking an encoding end as an example, code rate control information of an encoding block at time t can be determined based on a code stream buffer state and lossless encoding bit number information after the completion of the encoding of an encoding block at time t-3 before time t.
However, controlling the code rate of the current block using the relevant information of the historical block may result in an unclear state of the current code stream buffer, which may result in an overflow of the code stream buffer.

### Summary

Based on the above technical problems, the present application provides image encoding and decoding methods that can reduce a code rate for encoding by reducing an estimated bit number or increasing a target quantization parameter in the case that the number of bits remaining in the code stream buffer is small.
In a first aspect, the present application provides an image encoding method, wherein the method includes: acquiring a state of a code stream buffer; wherein the code stream buffer is configured for storing a code stream obtained after a block to be encoded is encoded; the state of the code stream buffer is a number of bits in the code stream buffer after a M-th block to be encoded counted backward from a current block to be encoded is encoded; M is a positive integer; in response to the state of the code stream buffer satisfying a preset condition, performing a first operation on an estimated bit number of the current block to be encoded; wherein the estimated bit number is a number of bits required for encoding the current block to be encoded which is predicted in the state of the code stream buffer; the first operation refers to reducing the estimated bit number by a penalty bit number indicated by a penalty parameter; performing encoding on the current block to be encoded based on an estimated bit number after the first operation has been performed.
In a second aspect, the present application provides an image encoding method, wherein the method includes: acquiring a state of a code stream buffer; wherein the code stream buffer is configured for storing a code stream obtained after a current block to be encoded is encoded; the state of the code stream buffer is a number of bits in the code stream buffer after a M-th block to be encoded counted backward from a current block to be encoded is encoded; M is a positive integer; in response to the state of the code stream buffer satisfying a preset condition, performing a first operation on an estimated bit number of the current block to be encoded; wherein the estimated bit number is a number of bits required for encoding the current block to be encoded which is predicted in the state of the code stream buffer; the first operation refers to reducing the estimated bit number by a penalty bit number; the penalty bit number is obtained based on a penalty parameter; the estimated quantization parameter is obtained based on the estimated bit number; determining a quantization parameter of the current block to be encoded based on an estimated bit number after the first operation has been performed, and performing encoding on the current block to be encoded based on the quantization parameter.
In a third aspect, the present application provides an image decoding method, wherein the method includes: acquiring a state of a code stream buffer; wherein the code stream buffer is configured for storing a code stream obtained after a block to be decoded is decoded; the state of the code stream buffer is a number of bits in the code stream buffer after a M-th block to be decoded counted backward from a current block to be decoded is decoded; M is a positive integer; in response to the state of the code stream buffer satisfying a preset condition, performing a first operation on an estimated bit number of the current block to be decoded; wherein the estimated bit number is a number of bits required for decoding the current block to be decoded which is predicted in the state of the code stream buffer; the first operation refers to reducing the estimated bit number by a penalty bit number indicated by penalty parameter; performing decoding on the current block to be decoded based on an estimated bit number after the first operation has been performed.

2

In a fourth aspect, the present application provides an image decoding method, wherein the method includes: acquiring a state of a code stream buffer; wherein the code stream buffer is configured for storing a code stream obtained after a current block to be decoded is decoded; the state of the code stream buffer is a number of bits in the code stream buffer after a M-th block to be decoded counted backward from the current block to be decoded is decoded; M is a positive integer; in response to the state of the code stream buffer satisfying a preset condition, performing a first operation on an estimated bit number of the current block to be decoded; wherein the estimated bit number is a number of bits required for decoding the current block to be decoded which is predicted in the state of the code stream buffer; the first operation refers to reducing the estimated bit number by a penalty bit number; the penalty bit number is obtained based on a penalty parameter; the estimated quantization parameter is obtained based on the estimated bit number; determining a quantization parameter of the current block to be decoded based on an estimated bit number after the first operation has been performed, and performing decoding on the current block to be decoded based on the quantization parameter.

In a fifth aspect, the present application provides an image encoding device including a processor and a memory; the memory stores instructions executable by the processor; the processor is configured to, when executing the instructions, cause the image encoding device to implement the image encoding methods described in the above first aspect and the above second aspect.

In a sixth aspect, the present application provides an image decoding device including a processor and a memory; the memory stores instructions executable by the processor; the processor is configured to, when executing the instructions, causes the image decoding device to implement the image decoding methods described in the above third aspect and the above fourth aspect.

In a seventh aspect, the present application provides an image decoding device including respective functional modules used for the methods described above in the first aspect and the second aspect.

In an eighth aspect, the present application provides an image encoding device including respective functional modules used for the methods described above in the third aspect and the fourth aspects.

In a ninth aspect, the present application provides an image encoding and decoding method, the method including: deriving an initial luminance QP and an initial chrominance QP from QPs derived by code control; determining a final luminance QP and a final chrominance QP based on the initial luminance QP, the initial chrominance QP and a preset alignment value.

In a tenth aspect, the present application provides an image encoding and decoding device including respective functional modules used for the method described above in the ninth aspect.

In a eleventh aspect, the present application provides an image encoding and decoding apparatus including a processor and a memory; the memory stores instructions executable by the processor; the processor is configured to, when executing the instructions, cause the image encoding and decoding device to implement the image encoding and decoding method described above in the ninth aspect.

In a twelfth aspect, the present application provides a readable storage medium including: computer program instructions, which, when run in an image encoding and decoding device, cause the image encoding and decoding device to implement the method described above in any one of the first to fourth aspects.

In a thirteenth aspect, the present application provides a readable storage medium including: computer program instructions, which, when run in an image encoding and decoding device, cause the image encoding and decoding device to implement the method described above in the ninth aspect.

## Brief Description of the Drawings

In order to illustrate technical solutions in embodiments of the present application more clearly, accompanying drawings needed in the description of the embodiments will be briefly introduced below. Obviously, the accompanying drawings in the following description are only some of the embodiments of the present application. For those ordinary skilled in the art, other accompanying drawings can be obtained according to these accompanying drawings without creative work.

Fig. 1 is a schematic flowchart of a code control solution;

Fig. 2 is a schematic diagram of a composition of a video encoding and decoding system provided by an embodiment of the present application;

Fig. 3 is a schematic diagram of a composition of a video encoder 102 provided by an embodiment of the present application;

Fig. 4 is a schematic diagram of a structure of a video decoder 112 provided by an embodiment of the present application;

Fig. 5 is a schematic flowchart of video encoding and decoding provided by an embodiment of the present application;

Fig. 6 is a schematic diagram of a composition of an image encoding and decoding device provided by an embodiment of the present application;

Fig. 7 is a schematic flowchart of an image encoding method provided by an embodiment of the present application;

Fig. 8 is a schematic flowchart of an image decoding method provided by an embodiment of the present application;

Fig. 9 is a schematic flowchart of another image encoding method provided by an embodiment of the present application;

Fig. 10 is a schematic flowchart of another image decoding method provided by an embodiment of the present application;

Fig. 11 is a schematic diagram of a composition of an image encoding apparatus provided by an embodiment of the present application;

Fig. 12 is a schematic diagram of a composition of an image decoding apparatus provided by an embodiment of the present application;

Fig. 13 is a schematic diagram of a composition of another image encoding apparatus provided by an embodiment of the present application;

Fig. 14 is a schematic diagram of a composition of another image decoding apparatus provided by an embodiment of the present application.

**Detailed Description**

First, the terms involved in the embodiments of the present application are introduced.

1. Video en/decoding technology:

Video en/decoding technology includes video encoding technology and video decoding technology, which can also be collectively referred to as video encoding and decoding technology. The video sequence has a series of redundant information such as spatial redundancy, temporal redundancy, visual redundancy, information entropy redundancy, structural redundancy, knowledge redundancy and importance redundancy, and so on. In order to remove as much redundant information from the video sequence as possible and reduce the amount of data characterizing the video, the video encoding technology is proposed, to achieve the effect of reducing storage space and saving transmission bandwidth. Video encoding technology is also called video compression technology.

In order to acquire data stored or transmitted based on the above video compression technology, video decoding technology is required accordingly.

Within the international scope, a video compression encoding standard is configured to standardize video encoding and decoding methods, such as Advanced Video encoding (AVC) in Part 10 of MPEG-2 and MPEG-4 standards formulated by Motion Picture Experts Group (MPEG), and H.263, H.264 and H.265 (also called High Efficiency Video encoding Standard (HEVC)) formulated by the International Telecommunication Union-Telecommunication Standardization Sector (ITU-T).

It should be noted that in an encoding algorithm based on hybrid encoding architecture, the above compression encoding methods can be configured in a mixed manner.

The basic processing unit in the video encoding and decoding process is an image block, which is obtained by dividing a frame/an image by the encoding end. The image blocks after division are usually processed row by row and one by one. Taking HEVC as an example, HEVC defines encoding Tree Unit (CTU), encoding Unit (CU), Prediction Unit (PU) and Transform Unit (TU). Any of the CTU, CU, PU and TU can be configured as an image block after division. Wherein, the CU is based for division for both PU and TU.

2. Video sampling

A pixel is the smallest complete sample of a video or an image. Therefore, the data processing of an image block is done in unit of pixels. Wherein, each pixel records color information. One way of sampling is to represent colors by RGB, which includes three image channels, wherein R represents red, G represents green, and B represents blue. Another way of sampling is to represent color by YUV, which includes three image channels, wherein Y represents luminance, U represents first chrominance Cb, and V represents second chrominance Cr. Since humans are more sensitive to luminance than to chrominance, the storage space can be reduced by storing more luminance and less chrominance. Specifically, in video encoding and decoding, YUV format is typically configured for video sampling, which includes 420 sampling format, 422 sampling format, etc. The sampling format determines the sampling number of two chrominances based on the sampling number of luminance. For example, assuming a CU has $4 \times 2$ pixels, in the following format:

[Y0, U0, V0][Y1, U1, V1][Y2, U2, V2][Y3, U3, V3];
[Y4, U4, V4][Y5, U5, V5] [Y6, U6, V6] [Y7, U7, V7];

The 420 sampling format indicates that the YUV is sampled in a format of 4:2:0, that is, the luminance and the first chrominance or the second chrominance are selected in a ratio of 4: 2, wherein the first chrominance and the second chrominance are selected in alternate rows. Then the above CU sampling selects the luminance Y0-Y3 in the first row and the first chrominance U0 and U2, and selects the luminance Y4-Y7 in the second row and the second chrominance V4 and V6. The sampled CU consists of a luminance encoding unit and a chrominance encoding unit, wherein the luminance encoding unit is:

[Y0] [Y1] [Y2] [Y3];

[Y4] [Y5] [Y6] [Y7];

the first chrominance encoding unit is:
[U0] [U2];

the second chrominance encoding unit is:
[V4] [V6];

It can be seen that the size of the image block after being sampled in the above sampling format has changed. The size of the luminance encoding unit block remains unchanged at $4 \times 2$, while the size of the first chrominance encoding unit block changes to $2 \times 1$ and the size of the second chrominance encoding unit block also changes to $2 \times 1$. Therefore, if the size of CU is assumed to be $X \times Y$, the size of chrominance encoding unit block after being sampled based on a 420 sampling format is X/2×Y/2.

Similarly, the 422 sampling format indicates that YUV is sampled in a format of 4: 2: 2, that is, the luminance, the first chrominance and the second chrominance are selected in a ratio of 4: 2: 2. Then the sampled luminance encoding unit of the CU is:

[Y0] [Y1] [Y2] [Y3];

[Y4] [Y5] [Y6] [Y7];

the first chrominance encoding unit is:

[U0] [U2];

[U4] [U6];

the second chrominance encoding unit is:

[V1] [V3];
[V5] [V7];

wherein, the size of the luminance encoding unit block remains unchanged at $4 \times 2$, while the size of the first chrominance encoding unit block changes to $2 \times 2$ and the size of the second chrominance encoding unit block also changes to $2 \times 2$. Therefore, if the size of CU is assumed to be $X \times Y$, the size of chrominance encoding unit block after being sampled based on a 422 sampling format is X/2×Y.

The luminance encoding unit, the first chrominance encoding unit and the second chrominance encoding unit obtained by sampling as described above are configured as data units of each channel for subsequent processing of the current block.

3. Substream parallelism (or also referred as substream interleaving):

For an encoding end, substream parallelization means that the encoding end encodes syntax elements of encoding blocks (CB) of different channels (such as luminance channel, first chrominance channel and second chrominance channel, etc.) of the encoding unit (CU) by using multiple entropy encoders to obtain multiple substreams, and interleaves the multiple substreams into a compressed bitstream with a fixed-size data packet. Correspondingly, for the decoding end, substream parallelism means that the decoding end decodes different substreams in parallel by using different entropy decoders.

4. Other terms:

Hereinafter, terms "first" and "second", etc. are used for descriptive purposes only, and cannot be understood as indicating or implying relative importance or implicitly indicating the number of indicated technical features. Thus, a feature defined as "first" or "second", etc may explicitly or implicitly include one or more such features.

In the scene of high-speed video transmission interface, hardware resources are limited, overly complex code control algorithms cannot be used, while too simple code control algorithms are difficult to achieve lossless compression.

In order to solve this problem, a code rate of a current block can be controlled by using relevant information of a historical block. For example, taking an encoding end as an example, code rate control information of an encoding block at time t can be determined according to a code stream buffer state and lossless encoding bit number information after the completion of the encoding of an encoding block at time t-3 before time t.

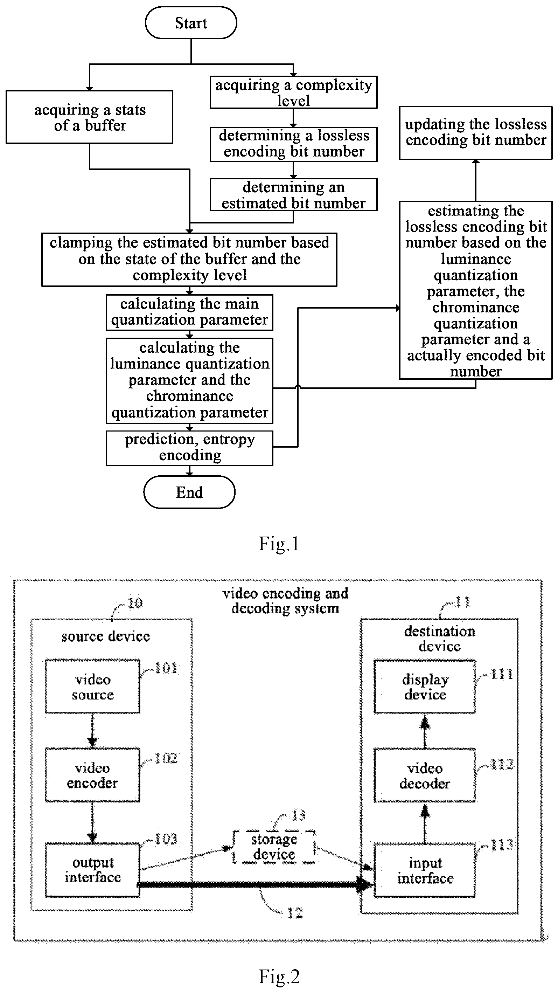

Exemplarily, Fig. 1 is a schematic flowchart of a code control solution. As shown in Fig. 1, the encoding end can acquire a state of a buffer and a complexity level of a current block to be encoded, determine a lossless encoding bit number based on the complexity level of the current block to be encoded, determine an estimated bit number based on the lossless encoding bit number, clamp the estimated bit number based on the state of the buffer and the complexity level, and determine a main quantization parameter, a luminance quantization parameter and a chrominance quantization parameter of the current block to be encoded based on the estimated bit number, and perform encoding on the current block to be encoded based on the main quantization parameter, the luminance quantization parameter and the chrominance quantization parameter, then estimate the lossless encoding bit number based on the luminance quantization parameter, the chrominance quantization parameter and a actually encoded bit number, and update the lossless encoding bit number.

However, controlling the code rate of the current block through using the relevant information of the historical block may result in an unclear state of the current code stream buffer, which may result in an overflow of the code stream buffer.

In this case, the embodiment of the present application provides an image encoding method and apparatus, an image decoding method and apparatus, and a storage medium, which can reduce the estimated bit number or increase the quantization parameter in response to the state of the code stream buffer satisfying a preset condition, so as to reduce the code rate of encoding.

Below is an introduction with the accompanying drawings.

Fig. 2 is a schematic diagram of a composition of a video encoding and decoding system provided by an embodiment of the present application. As shown in Fig. 2, the video encoding and decoding system includes a source device 10 and a destination device 11.

The source device 10 generates encoded video data, the source device 10 can also be referred to as an encoding end, a video encoding end, a video encoding device or a video encoding apparatus, etc., and the destination device 11 can decode the encoded video data generated by the source device 10, the destination device 11 can also be referred to as a decoding end, a video decoding end, a video decoding device or a video decoding apparatus, etc. The source device 10 and/or the destination device 11 may include at least one processor and a memory coupled to the at least one processor. The above memory may include, but is not limited to, a Read-Only Memory (ROM), a Random Access Memory (RAM), an Electrically Erasable Programmable Read-Only Memory (EEPROM), a flash memory, or any other medium that can be configured to store the desired program code in the form of instructions or data structures accessible by a computer, which is not specifically limited by the embodiment of the present application.

The source device 10 and the destination device 11 may include various devices, including desktop computers, mobile computing devices, notebook (e.g., laptop) computers, tablet computers, set-top boxes, telephone handsets such as so-called "smart" phones, televisions, cameras, display devices, digital media players, video game consoles, vehicle-mounted computers or the similar electronic apparatuses.

The destination device 11 may receive encoded video data from the source device 10 via a link 12. The link 12 may include one or more media and/or devices capable of moving encoded video data from the source device 10 to the destination device 11. In one instance, the link 12 may include one or more communication media that enable the source device 10 to directly transmit the encoded video data to the destination device 11 in real time. In this instance, the source device 10 may modulate the encoded video data according to a communication standard (e.g., a wireless communication protocol) and may transmit the modulated video data to the destination device 11. The above one or more communication media may include a wireless and/or wired communication media, such as a Radio Frequency (RF) spectrum and one or more physical transmission lines. The above one or more communication media may form a part of packet-based network, such as local area network, wide area network or global network (e.g., the Internet). The above one or more communication media may include routers, switches, base stations, or other apparatuses that enable communication from the source device 10 to the destination device 11.

In another instance, the source device 10 may output the encoded video data from the output interface 103 to the storage device 13. Similarly, the destination device 11 can access the encoded video data from the storage device 13 via the input interface 113. The storage device 13 may include various locally accessible data storage media, such as a Blu-ray Disc, a Digital Video Disc (DVD), a Compact Disc Read-Only Memory (CD-ROM), a flash memory, or other suitable digital storage media for storing encoded video data.

In another instance, the storage device 13 may correspond to a file server or another intermediate storage device that stores the encoded video data generated by the source device 10. In this instance, the destination device 11 can acquire, from the storage device 13, the video data stored therein through streaming or downloading. The file server may be any type of server capable of storing encoded video data and transmitting the encoded video data to the destination device 11. For example, a file server may include a World Wide Web (Web) server (for example, for a website), a File Transfer Protocol (FTP) server, a Network Attached Storage (NAS) device, and a local disk drive.

The destination device 11 can access the encoded video data via any standard data connection (for example, Internet connection). The type of data connection instances includes wireless channels, wired connections (e.g., cable modems, etc.), or a combination of both, which are suitable for accessing encoded video data stored on a file server. The encoded video data can be transmitted from the file server by streaming, downloading or a combination of both.

It should be noted that the image encoding and decoding methods provided by the embodiments of the present application are not limited to wireless application scenarios.

Exemplarily, the image encoding and decoding methods provided by the embodiments of the present application is not limited to wireless application scenarios. For example, the en/decoding method of the present application can be applied to video encoding and decoding that supports a variety of multimedia applications as follows: over-the-air television broadcasting, cable television transmissions, satellite television transmissions, streaming video transmissions (for example, via the Internet), encoding of video data stored on a data storage media, decoding of video data stored on the data storage media, or other applications. In some instances, the video encoding and decoding system can be configured to support unidirectional or bidirectional video transmission to support applications such as video streaming, video playing, video broadcasting and/or video telephony.

It should be noted that the video encoding and decoding system as shown in Fig. 2 is only an example of a video encoding and decoding system, and is not a limitation of the video encoding and decoding system in the present application. The image encoding and decoding methods provided by the present application can also be applicable to a scenario where there is wireless data communication between the encoding device and the decoding device. In other embodiments, the video data to be decoded or the encoded video data can be retrieved from local storage, or can be streamed on the network, and the like. The video encoding device can encode the video data to be encoded and store the encoded video data in the memory, and the video decoding device can also acquire the encoded video data from the memory and decode the same.

In the embodiment of Fig. 2, a source device 10 includes a video source 101, a video encoder 102 and an output interface 103. In some embodiments, the output interface 103 may include a modulator/demodulator (modem) and/or a transmitter. The video source 101 may include a video capture device (e.g., a camera), a video archive containing previously captured video data, a video input interface for receiving video data from a video content provider, and/or a computer graphics system for generating video data, or a combination of these sources of video data.

The video encoder 102 may encode video data from the video source 101. In some embodiments, the source device 10 directly transmits the encoded video data to the destination device 11 via the output interface 103. In other embodiments, the encoded video data can also be stored on the storage device 13 for later access by the destination device 11 for decoding and/or playing.

In the embodiment of Fig. 2, the destination device 11 includes a display device 111, a video decoder 112, and an input interface 113. In some embodiments, the input interface 113 includes a receiver and/or a modem. The input interface 113 may receive encoded video data via the link 12 and/or from the storage device 13. The display device 111 may be integrated with the destination device 11 or may be external to the destination device 11. Generally, the display device 111 displays the decoded video data. The display device 111 may include various display devices, for example, a liquid crystal display, a plasma display, an organic light emitting diode display, or other types of display devices.

In an embodiment, the video encoder 102 and the video decoder 112 may be respectively integrated with the audio encoder and decoder, and may include appropriate multiplexer-demultiplexer units or other hardware and software to handle the encoding of both audio and video in a common data stream or separate data streams.

The video encoder 102 and the video decoder 112 may include at least one microprocessor, a Digital Signal Processor (DSP), an Application-Specific Integrated Circuit (ASIC), a Field Programmable Gate Array (FPGA), discrete logic, hardware or any combination thereof. If the en/decoding method provided by the present application is implemented by software, the instructions for the software can be stored in a suitable nonvolatile computer-readable storage medium, and the instructions can be executed by at least one processor to implement the present application.

The video encoder 102 and the video decoder 112 in the present application can operate according to a video compression standard (for example, HEVC) or other industry standards, which is not specifically limited in the present application.

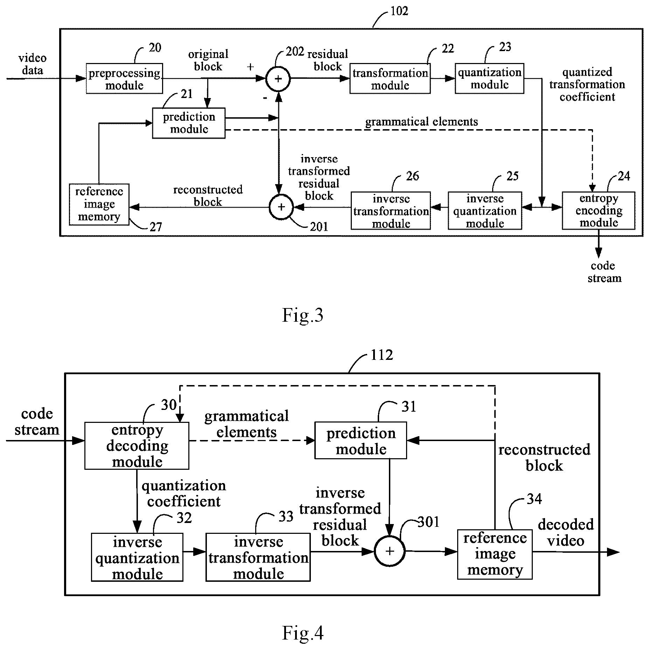

Fig. 3 is a schematic diagram of a composition of a video encoder 102 provided in an embodiment of the present application. As shown in Fig. 3, the video encoder 102 can perform prediction, transformation, quantization and entropy encoding in a prediction module 21, a transformation module 22, a quantization module 23 and an entropy encoding module 24, respectively. The video encoder 102 also includes a preprocessing module 20 and a summator 202, wherein the preprocessing module 20 includes a partition module and a code rate control module. For video block reconstruction, the video encoder 102 may also include an inverse quantization module 25, an inverse transformation module 26, a summator 201 and a reference image memory 27.

As shown in Fig. 3, the video encoder 102 receives video data, and the preprocessing module 20 obtains input parameters of the video data. Wherein, the input parameters include a resolution of an image, a sampling format of the image, bits per pixel (BPP), bit width (or it can also be referred to as an image bit width) and other information in the video data. Wherein, BPP refers to the number of bits occupied by a unit pixel. Bit width refers to the number of bits occupied by a pixel channel in a unit pixel. For example, a pixel is represented by the values of three pixel channels in YUV. If each pixel channel occupies 8 bits, the bit width of this pixel is 8, and the BPP of this pixel is $3\times8=24$ bits.

The partition module in the preprocessing module 20 partitions the image into original blocks (or it can also be referred to as a coding unit (CU)). The original block (or it can also be referred to as a coding unit (CU)) may include encoding blocks of multiple channels. For example, the multiple channels can be RGB channels or YUV channels or other like. The embodiment of the present application does not limit this. In an embodiment, this partition may also include partition into slices, image blocks or other larger units, and video block partition according to the quadtree structure of CU and Largest encoding unit (LCU). Exemplarily, the video encoder 102 is an assembly for encoding video blocks in a video slice to be encoded. Generally, a slice can be divided into multiple original blocks (and can be divided into a set of original blocks called image blocks). The sizes of CUs, PUs and TUs are usually determined in the partition module. In addition, the partition module is also configured to determine the size of the code rate control unit. The code rate control unit refers to a basic processing unit in the code rate control module. For example, in the code rate control module, the complexity information is calculated for the original block, based on the code rate control unit, and then calculates the quantization parameter of the original block based on the complexity information. Wherein, the partition strategy of the partition module can be preset, or can be continuously adjusted based on an image during the encoding process. When the partition strategy is a preset strategy, the same partition strategy is also preset in the decoding end accordingly, so as to acquire the same image processing unit. The image processing unit is any one of the above image blocks, and corresponds to the encoding side one by one. When the partition strategy is continuously adjusted based on the image during the encoding process, it can be directly or indirectly encoded into the code stream, and accordingly, the decoding end acquires corresponding parameters from the code stream to obtain the same partition strategy and acquire the same image processing unit.

The code rate control module in the preprocessing module 20 is configured to generate a quantization parameter so that the quantization module 23 and the inverse quantization module 25 can perform relevant calculation. Wherein, during the process of calculating the quantization parameter, the code rate control module can acquire the image information of the original block for calculation, such as the above input information; it can also acquire a reconstructed value obtained by the reconstruction through the summator 201 for calculation, which is not limited in the present application.

The prediction module 21 can provide a prediction block to the summator 202 to generate a residual block, and provide the prediction block to the summator 201 to be reconstructed to obtain a reconstructed block, which is configured as a reference pixel for subsequent prediction. Wherein, the video encoder 102 subtracts the pixel value of the prediction block from the pixel value of the original block to form a pixel difference, which is a residual block, and the data in the residual block may include luminance difference and chrominance difference. The summator 201 represents one or more assemblies that perform this subtraction operation. The prediction module 21 can also send relevant syntax elements to the entropy encoding module 24 for merging into the code stream.

The transformation module 22 can divide the residual block into one or more TUs for transformation. The transformation module 22 may transform the residual block from a pixel domain to a transform domain (e.g., a frequency domain). For example, the residual block is transformed to obtain a transformation coefficient using a Discrete Cosine Transform (DCT) or a Discrete Sine Transform (DST). The transformation module 22 may send the obtained transformation coefficient to the quantization module 23.

The quantization module 23 may perform quantization based on the quantization unit. Wherein, the quantization unit can be the same as the CU, TU and PU mentioned above, and can also be further divided in the partition module. The quantization module 23 quantizes the transformation coefficient to further reduce the code rate to obtain a quantized coefficient. Wherein, the quantization process may reduce the bit depth associated with some or all of the coefficients. The degree of quantization can be modified by adjusting the quantization parameter. In some feasible embodiments, the quantization module 23 may then perform a scan of a matrix containing quantized transformation coefficients. Alternatively, the entropy encoding module 24 may perform the scan.

After quantization, the entropy encoding module 24 may perform entropy encoding on the quantized coefficient. For example, the entropy encoding module 24 may perform a Context-Adaptive Variable-Length Coding (CAVLC), the Context-based Adaptive Binary Arithmetic Coding (CABAC), a Syntax-based Context-based Adaptive Binary Arithmetic Decoding (SBAC), a Probability Interval Partition Entropy (PIPE) decoding, or another entropy encoding method or technology. The substream is obtained after the entropy encoding is performed by the entropy encoding module 24, the code stream can be obtained after the entropy encoding is performed by a plurality of entropy encoding modules 24, and the code stream can be transmitted to the video decoder 112 or archived for transmission or being retrieved by the video decoder 112 later.

The inverse quantization module 25 and the inverse transformation module 26 apply inverse quantization and inverse transformation respectively, and the summator 201 adds the residual block obtained after being inverse transformed and the predicted residual block to generate a reconstructed block, which is configured as a reference pixel for a subsequent prediction of the original block. The reconstructed block is stored in the reference image memory 27.

Fig. 4 is a schematic diagram of a structure of a video decoder 112 provided by an embodiment of the present application. As shown in Fig. 4, the video decoder 112 includes an entropy decoding module 30, a prediction module 31, an inverse quantization module 32, an inverse transformation module 33, a summator 301 and a reference image memory 34.

The entropy decoding module 32 includes a parsing module and a code rate control module. In some feasible embodiments, the video decoder 112 may perform a decoding flow that exemplarily inverses to the encoding flow described regrading to the video encoder 102 of Fig. 3.

During the decoding process, the video decoder 112 receives a code stream of the encoded video from the video encoder 102. The parsing module in the entropy decoding module 30 of the video decoder 112 may perform entropy decoding on the code stream to generate quantized coefficients and syntax elements. The entropy decoding module 30 may transmit the syntax elements to the prediction module 31. The video decoder 112 may receive the syntax elements at the video slice grade and/or the video block grade.

The code rate control module in the entropy decoding module 30 generates quantization parameters based on information of an image to be decoded obtained by the parsing module, so that the inverse quantization module 32 can perform relevant calculation. The code rate control module can also calculate quantization parameters based on the reconstructed block obtained by the reconstruction through the summator 301.

The inverse quantization module 32 performs inverse quantization (e.g., inverse quantization) on the quantized coefficients provided in the code stream and decoded by the entropy decoding module 30 and the generated quantization parameter. The inverse quantization process may include determining a degree of quantization using the quantization parameter calculated by the video encoder 102 for each video block in a video slice, and similarly, determining a degree of inverse quantization applied. The inverse transformation module 33 applies inverse transformation (for example, transformation methods such as DCT and DST, etc.) to the inverse quantized transformation coefficients, and an inverse transformed residual block is generated in the pixel domain through the inverse transformation unit based on the inverse quantized transformation coefficients. Wherein, a size of the inverse transformation unit is the same as that of TU, and the inverse transformation method and transformation method adopt forward transformation and corresponding inverse transformation in the same transformation method, for example, inverse transformations of DCT and DST are inverse DCT, inverse DST, or a conceptually similar inverse transformation process.

After the prediction module 31 generates a prediction block, the video decoder 112 forms a decoded video block by summing the inverse transformed residual block from the inverse transformation module 33 with the prediction block. Summator 301 represents one or more assemblies that perform this summation operation. If required, a deblocking filter can also be applied to filter the decoded block in order to remove block effect artifacts. The decoded image blocks in a given frame or images are stored in the reference image memory 34 as a reference pixel for subsequent prediction.

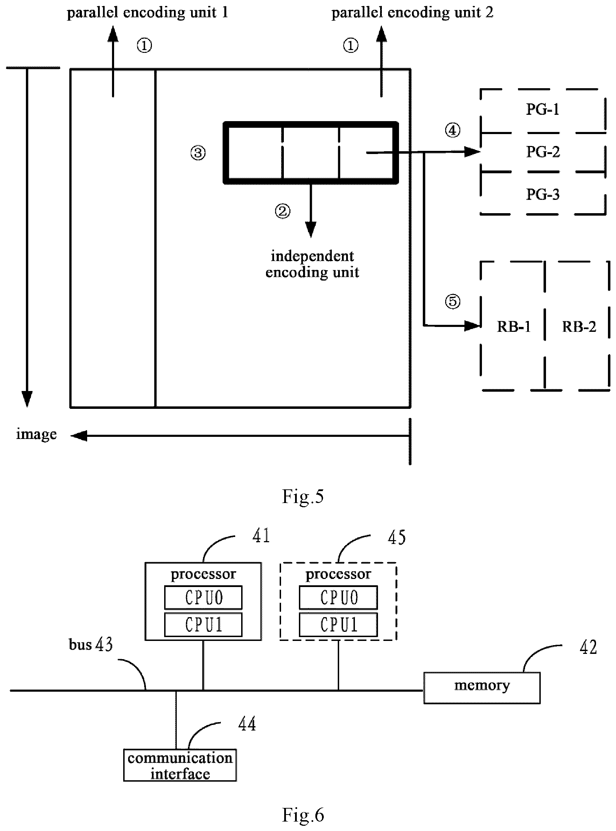

An embodiment of the present application provides a possible video (image) encoding and decoding implementation, as shown in Fig. 5, which is a schematic diagram of a process of a video encoding and decoding provided by the embodiment of the present application. The video encoding and decoding implementation includes process ① to process ⑤, which can be performed by any one or more of the above source device 10, video encoder 102, destination device 11 or video decoder 112.

Process ①: Dividing a frame of image into one or more parallel encoding units that do not overlap each other. The one or more parallel encoding units have no dependency on each other, and can be encoded and decoded completely in parallel/independently, such as parallel encoding unit 1 and parallel encoding unit 2 shown in Fig. 5.

Process ②: Each parallel encoding unit can be further divided into one or more independent encoding units that do not overlap each other. All the independent encoding units may not depend on each other, but can share some parallel encoding unit header information.

The independent encoding unit can either include three channels of luminance Y, first chrominance Cb and second chrominance Cr, or three channels of RGB, or it can include only one of the channels. If the independent encoding unit includes three channels, the sizes of these three channels can be exactly the same or different, which depends on the input format of the image. The independent encoding unit can also be understood as one or more processing units formed by N-channels contained in each parallel encoding unit. For example, the above three channels of Y, Cb and Cr are the three channels constituting the parallel encoding unit, of which each can be an independent encoding unit, or, Cb and Cr can be collectively referred to as a chrominance channel, and then the parallel encoding unit includes an independent encoding unit consisting of a luminance channel and an independent encoding unit consisting of a chrominance channel.

Process ③: Each independent encoding unit can be further divided into one or more encoding units that do not overlap each other. All the encoding units in the independent encoding unit may depend on each other, for example, multiple encoding units can be pre-encoded and pre-decoded with reference to each other.

If the encoding unit has the same size as the independent encoding unit (that is, the independent encoding unit is only divided into only one encoding unit), it can be of all the sizes described in Process ②.

The encoding unit can either include three channels of luminance Y, first chrominance Cb and second chrominance Cr (or three channels of RGB), or it can include only one of the channels. If three channels are included, the sizes of these channels can be exactly the same or different, which depends on the input format of the image.

It is worth noting that process ③ is an optional step in the video encoding and decoding method, and the video encoder/decoder can encode/decode the residual coefficient (or residual value) of the independent encoding unit obtained in process ②.

Process ④: The encoding unit can be further divided into one or more Prediction Group (PG) that do not overlap each other, which can also be referred to as Group for short. Each PG is encoded and decoded based on a selected prediction mode to obtain a prediction value of PG, which constitutes the prediction value of the whole encoding unit. Based on the prediction value and the original value of the encoding unit, the residual value of the encoding unit is obtained.

Process ⑤: Based on the residual values of encoding units, encoding units are grouped to obtain one or more residual blocks (RBs) that do not overlap each other, and the residual coefficients of all of RBs are encoded and decoded based on the selected mode to form a residual coefficient stream. Specifically, the residual coefficients can be divided into two categories: transformed and untransformed.

Wherein, the selected mode of the method of encoding and decoding residual coefficients in process ⑤ may include, but is not limited to, any of the following: a semi-fixed length encoding method, an exponential Golomb encoding method, a Golomb-Rice encoding method, a truncated unary code encoding method, a run-length encoding method, a direct encoding method of original residual values, etc.

For example, the video encoder can directly encode the coefficients within the RB.

For another example, the video encoder can also perform transformation, such as DCT, DST, Hadamard transform, etc., on the RB, and then encode the transformed coefficient.

As a possible example, when the RB is small, the video encoder can directly quantize uniformly all the coefficients in the RB and then perform a binary encoding. If RB is large, it can be further divided into multiple coefficient groups (CGs), and then all of the CGs are quantized uniformly, and then performed a binary encoding. In some embodiments of the present application, the coefficient group (CG) and the quantization group (QG) can be the same.

Encoding a residual coefficient in a method of semi-fixed length encoding is exemplarily described below. Firstly, the maximum number of the absolute value of residual in an RB block is defined as a modified maximum (mm). Secondly, the number of bits for encoding a residual coefficient within the RB block is determined (the number of bits for encoding the residual coefficients within the same RB block are consistent). For example, if the critical limit (CL) of the current RB block is 2, the current residual coefficient is 1, then 2 bits are required to encode the residual coefficient 1, which is represented by 01. If the CL of the current RB block is 7, it means that an 8-bit residual coefficient and a 1-bit sign bit are encoded. The CL is determined by finding the minimum M value that satisfies that all residuals of the current sub-block are within a range of $[-2^{(M-1)}, 2^{(M-1)}]$. If both boundary values of $-2^{(M-1)}$ and $2^{(M-1)}$ exist, M should be increased by 1, that is, M+1 bits are required to encode all residuals of the current RB block; if only one of the two boundary values $-2^{(M-1)}$ and $2^{(M-1)}$ exists, it is necessary to encode a Trailing bit to determine whether the boundary value is $-2^{(M-1)}$ or $2^{(M-1)}$; and if none of $-2^{(M-1)}$ and $2^{(M-1)}$ exist in all of the residuals, there is no need to encode the Trailing bit.

In addition, for some special cases, the video encoder can also directly encode the original value of the image instead of the residual value.

The above-mentioned video encoder 102 and video decoder 112 can also be realized by another way, for example, realized by using a general digital processing system. Please refer to Fig. 6, which is a schematic diagram of a composition of an image encoding and decoding device provided by an embodiment of the present application. The image encoding and decoding device can be applied to an encoding side (or an encoding end) and/or a decoding side (or a decoding end). As shown in Fig. 6, the image encoding and decoding device includes a processor 41 and a memory 42. The processor 41 is connected to the memory 42 (for example, connected to each other via a bus 43). In an embodiment, the encoding and decoding device may further include a communication interface 44, which is connected to the processor 41 and the memory 42 for receiving/sending data.

The processor 41 is configured for executing instructions stored in the memory 42, to realize the image encoding and decoding methods provided by the following embodiments of the present application. The processor 41 may be a central processing unit (CPU), a general purpose processor, a network processor (NP), a digital signal processing (DSP), a microprocessor, a microcontroller, a programmable logic device (PLD) or any combination thereof. The processor 41 can also be any other device with processing function, such as a circuit, a device or a software module, which is not limited in the embodiments of the present application. In one example, the processor 41 may include one or more CPUs, such as CPU0 and CPU1 in Fig. 6. As an optional implementation, the electronic device may include a plurality of processors, for example, in addition to the processor 41, it may also include the processor 45 (illustrated by dashed lines in fig. 6).

A memory 42 is configured for storing instructions. For example, the instructions may be computer programs. In an embodiment, the memory 42 may be a read-only memory (ROM) or a static storage apparatus that can store static information and/or other types of instructions, or a random access memory (RAM) or a dynamic storage apparatus that can store information and/or other types of instructions, it can also be an electrically erasable programmable read-only memory (EEPROM), a compact disc read-only memory (CD-ROM) or other optical disc storage, optical disk storage (including a compact disk, a laser disk, an optical disk, a digital versatile disk, a Blu-ray disk, etc.), magnetic disc storage medium or other magnetic storage apparatuses, etc., which are not limited by embodiments of the present application.

It should be noted that the memory 42 may exist independently of the processor 41 or may be integrated with the processor 41. The memory 42 can be located inside the image encoding and decoding device or outside the image encoding and decoding device, which is not limited by the embodiments of the present application.

The bus 43 is configured for transmitting information between various components included in the encoding and decoding device. The bus 43 may be an industry standard architecture (ISA) line, a peripheral component interconnect (PCI) line or an extended industry standard architecture (EISA) line, etc. The bus 43 can be divided into address lines, data lines, control lines, etc. For the convenience of representation, only one solid line is shown in Fig. 6, but it does not mean that there is only one line or one type of line.

A communication interface 44 is used for communicating with other devices or other communication networks. The other communication networks may be an Ethernet, a radio access network (RAN), a wireless local area networks (WLAN), etc. The communication interface 44 may be a module, a circuit, a transceiver or any device capable of communication. The embodiments of the present application do not limit these.

It should be noted that the structure shown in Fig. 6 does not constitute a limitation to the image encoding and decoding device, and the image encoding and decoding device may include, in addition to the components illustrated in FIG. 6, more or less components than those shown in Fig. 6, or a combination of some components, or a different arrangement of components.

The execution subject of the image encoding and decoding methods provided by the embodiments of the present application may be the above-mentioned image encoding and decoding device, or an application (APP) installed in the image encoding and decoding device for providing image encoding and decoding functions; or, a CPU in the image encoding and decoding device; or, a functional module in the image encoding and decoding device that is configured for executing the image encoding and decoding methods. The embodiments of the present application do not limit these. In order to make the description simple, the following description will be uniformly described by taking the image encoding and decoding device as the encoding end or decoding end as an example.

The image encoding and decoding methods provided by the embodiments of the present application are described below in conjunction with the accompanying drawings.

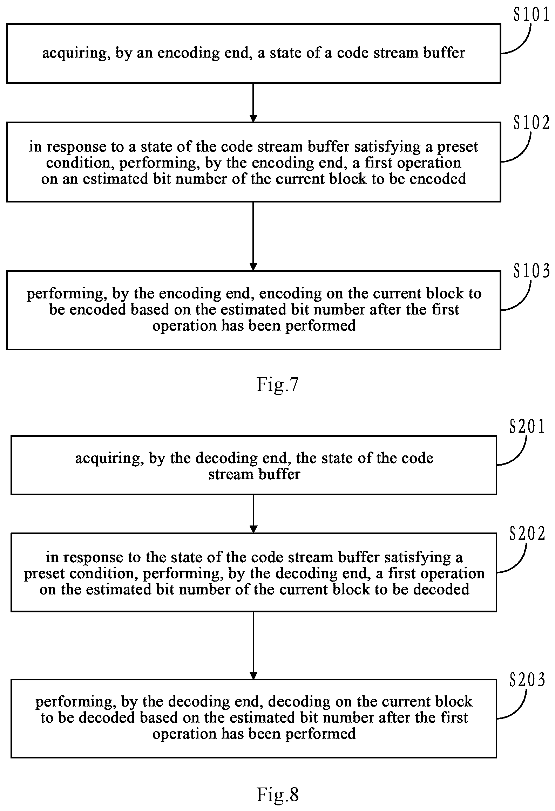

Fig. 7 is a schematic flowchart of an image encoding method provided by an embodiment of the present application. As shown in Fig. 7, the image encoding method includes S101 to S103.

S101: acquiring, by an encoding end, a state of a code stream buffer.

The code stream buffer is configured for storing a code stream obtained after a block to be encoded is encoded. The state of the code stream buffer is the number of bits in the code stream buffer after the M-th block to be encoded counted backward from the current block to be encoded is encoded, wherein M is the number of delay blocks mentioned above, and M is a positive integer. The number of bits in the code stream buffer at a certain moment refers to the difference between the number of bits flowing into the code stream buffer and the number of bits flowing out of the code stream buffer up to this moment.

For example, assuming that as of the moment when the encoding of the M-th block to be encoded counted backward from the current block to be encoded is completed, 100 bits flow into the code stream buffer and 80 bits flow out of the code stream buffer, then the variation quantity in the state of the code stream buffer when the encoding of the M-th block to be encoded counted backward from the current block to be encoded is completed acquired at the current moment is 100-80 = 20 bits, and assuming that the cumulative quantity in the state of the code stream buffer before the M-th block is 20 bits, then the state of the code stream buffer at the moment when the encoding of M-th block to be encoded is completed is a sum of the cumulative quantity and the variation quantity, 20+20=40 bit.

In a possible implementation, the code stream buffer may include a main buffer and an additional buffer. Both the main buffer and the additional buffer are configured to store the code stream obtained after the block to be encoded is encoded.

In an embodiment, the main buffer and the additional buffer can be different physical storage partitions.

For example, the main buffer can be provided in the storage device 1 and the additional buffer can be provided in the storage device 2.

In an embodiment, the main buffer and the additional buffer can also be different logical storage partitions.

For example, both the main buffer and the additional buffer can be provided in the storage device 1, that is, the main buffer and the additional buffer are different logical storage partitions in the storage device 1.

S102: in response to a state of the code stream buffer satisfying a preset condition, performing, by the encoding end, a first operation on an estimated bit number of the current block to be encoded.

The estimated bit number is the number of bits required for encoding the current block to be encoded which is predicted in the state of the code stream buffer. The first operation refers to reducing the estimated bit number by a penalty bit number indicated by a penalty parameter. The description of the penalty bit number indicated by the penalty parameter can refer to the specific implementation process described below, and will not be repeated here.

In an embodiment, the preset condition may be that a size of an available buffer determined based on the state of the code stream buffer is smaller than the available space in the additional buffer, that is, the space of the additional buffer is employed in the process of encoding. **In** this case, the above S102 may specifically include the following three steps: Step 1: determining, by the encoding end, a size of the available buffer based on the state of the code stream buffer.

The size of the available buffer is configured to characterize a predicted available size of the code stream buffer after the current block to be encoded is encoded by using the estimated bit number.

For example, the encoding end can determine the size of the available buffer based on the state of the code stream buffer, the estimated bit number of the current block to be encoded, and respective estimated bit numbers of the M blocks to be encoded before the current block to be encoded.

In a possible implementation, the above step 1 may specifically include: acquiring, by the encoding end, the estimated bit numbers of M blocks to be encoded before the current block to be encoded; determining, by the encoding end, the size of the available buffer based on a sum of the code stream buffer and a reference variation value.

Wherein, the reference variation value is a difference between a fixed outflow bit number of M+1 blocks in the code stream buffer and an estimated inflow bit number of the M+1 blocks in the code stream buffer. The fixed outflow bit number of the M+1 blocks in the code stream buffer is a product of the number of pixel points of each block to be encoded, a preset pixel depth and M+1. The estimated inflow bit number of the M+1 blocks in the code stream buffer is a sum of an estimated bit number of the current block to be encoded and the respective estimated bit numbers of M blocks to be encoded before the current block to be encoded.

In an embodiment, for any historical block that is any one of the M blocks to be encoded before the block to be encoded, the encoding end can directly acquire an estimated bit number acquired in response to encoding this historical block.

In an embodiment, for the any historical block, the encoding end can also acquire a complexity level of the historical block and a complexity level of the current block to be encoded, and determine an estimated bit number of the historical block based on a quotient of the complexity level of the historical block and a reference value.

Wherein the reference value is a product of the complexity level of the current block to be encoded and an estimated bit number of the current block to be encoded.

In an embodiment, the encoding end can perform calculation to obtain the estimated bit number of the historical block according to the following Formula (1):

$$\text{TargetRate}_{t-i} = \text{complexity}_{t-i} \ / \ \text{complexity} * \text{TargetRate} \qquad \text{Formula (1)}$$

In Formula (1), TargetRate$_{t-i}$ indicates the estimated bit number of the historical block. complexity$_{t-i}$ indicates the complexity level of the historical block. complexity indicates the complexity level of the current block to be encoded. TargetRate indicates the estimated bit number of the current block to be encoded.

Step 2, acquiring, by the encoding end, an additional buffer threshold.

Wherein the additional buffer threshold is configured to characterize an available space of the additional buffer.

In a possible implementation, the penalty parameter may include a first penalty parameter. In this case, the above step 2 may specifically include: in response to the current block to be encoded being an ending block of a slice where the current block to be encoded is located, determining, by the encoding end, the additional buffer threshold based on a difference between an initial size of the additional buffer and a reference product.

Wherein, the ending block is a block to be encoded that needs to be filled with preset placeholder bits. The ending block is a block to be encoded that needs to be filled with placeholder bits when the initial transmission delay function is enabled. The description of the initial transmission delay function can refer to the related art, and will not be repeated here. The ending block may be multiple. The initial size of the additional buffer can be preset in the encoding end by a manager, and its value is related to the data type, the preset BPP, and the number of delayed blocks of the image where the current block to be encoded is located. For example, for a 10-bit image delayed by 2 blocks, the initial size of the additional buffer can be set to 8192 bit. The embodiment of the present application does not limit the specific value of the initial size of the additional buffer. The reference product is a product of a reference ranking and a first penalty parameter, and the reference ranking is a ranking of the current block to be encoded in ending blocks. The first penalty parameter is a value by which the additional buffer threshold decreases every time the reference ranking is increased by one block to be encoded, or a descending step size by which the additional buffer threshold descends every time the reference ranking is increased by one block to be encoded.

Examplarily, the initial size of the additional buffer is 1000 bit. Assuming that the descending step size indicated by the first penalty parameter is 50 bit, when the current block to be encoded is a first ending block, the additional buffer threshold is $1000-50\times1=950$ bit; and when the current block to be encoded is a second ending block, the additional buffer threshold is $1000-50\times2 =900$ bit; and when the current block to be encoded is a third ending block, the additional buffer threshold is $1000-50\times3=850$ bit, ..., and so on until the additional buffer threshold is 0.

In an embodiment, the additional buffer threshold can be obtained by performing calculation according to the following formula (1):

$$ExtraBufferThreshold=Max\left(0,\ ExtraBufferThreshold-\left(1<<ExtraDecreaseStepLog2\right)\right)$$

Formula (2)

In the formula (2), ExtraBufferThreshold is the additional buffer threshold, which is initialized to an initial size of the additional buffer (ExtraBufferSize). ExtraDecreaseStepLog2 is the base-2 logarithm of the first penalty parameter. ExtraDecreaseStepLog2 is configured to control the coverage of the additional buffer, the larger the value, the smaller the coverage of the additional buffer, and this value only affects the coverage of the additional buffer when encoding and decoding to the ending blocks.

In an embodiment, in response to the current block to be encoded being a block to be encoded other than the ending block, the additional buffer is set to the initial size of the additional buffer.

In an embodiment, before the above step 1, the method may further include: acquiring, by the encoding end, the number of ending blocks; determining, by the encoding end, the first penalty parameter based on the initial size of the additional buffer and the number of the ending blocks.

In an embodiment, the first penalty parameter can be obtained by performing calculation according to the following formula (2):

$$ExtraBufferDecreaseStepLog2=[Log(ExtraBufferSize/EndControlBlocks)]$$

Formula (3)

In formula (3), EndControlBlocks is the number of ending blocks.

In an embodiment, the value of ExtraBufferDecreaseStepLog2 may be a value less than or equal to DecreaseStepLog2, DecreaseStepLog2 is the base-2 logarithm of an step size of preset placeholder bits filled at the end of the slice increased in each of the blocks to be encoded.

For example, assuming that the placeholder bits filled in the first ending block is 50 bits and its step size is 50 bits, the placeholder bits filled in the second ending block is 50+50=100 bits, and the placeholder bits in the third ending block is 50+50+50 = 150 bits, ... and so on.

When ExtraBufferDecreaseStepLog2 = DecreaseStepLog2, that is, the ending blocks of the slice first fill the additional buffer with the placeholder bits, the additional buffer disappears after filling, the first operation is no longer performed on an estimated bit number at this time.

In an embodiment, the value of the above-mentioned ExtraBufferDecreaseStepLog2 can also be a value greater than DecreaseStepLog2. When ExtraBufferDecreaseStepLog2 is too large, for example, greater than a preset penalty threshold, there is no additional buffer starting from the first ending block of the slice, and the first operation is no longer performed on the estimated bit number.

A penalty threshold is related to the size of the additional buffer. For example, if the size of the additional buffer is 8192 bits, the penalty threshold can be 1408 bits.

It should be understood that the ending blocks are usually several blocks (image blocks) to be encoded in a slice with rear encoding orders. The closer a slice is to encoding completion, the larger the reference ranking of the current block to be encoded in the ending blocks, the larger the reference product, and the smaller the additional buffer threshold, and the less likely that the estimated bit number of the current block to be encoded is to be subjected to the first operation that more encoding blocks are filled into the additional buffer to make full use of encoding resources.

In another possible implementation, the encoding end can directly determine the initial size of the additional buffer as the additional buffer threshold. In this possible embodiment, it can be sufficiently ensured that buffering mechanism is present.

Step 3, in response to the size of the available buffer being smaller than the additional buffer threshold, performing, by the encoding end, the first operation on the estimated bit number of the current block to be encoded.

In a possible implementation, the penalty parameter further includes a second penalty parameter, which is the number of blocks to be encoded that is expected to consume the number of bits in the additional buffer. In this case, before performing, by the encoding end, the first operation on the estimated bit number of the current block to be encoded, the method further includes: acquiring, by the encoding end, the number of remaining blocks to be encoded in the slice where the current block to be encoded is located; wherein in response to the number of the remaining blocks to be encoded being less than the second penalty parameter, in the first operation performed on the estimated bit number of the current block to be encoded, the penalty bit number indicated by the penalty parameter is a product of the number of the current remaining blocks to be encoded and a preset pixel depth.

In another possible implementation, in response to the number of the current remaining blocks to be encoded being greater than the second penalty parameter, in the first operation performed on the estimated bit number of the current block to be encoded, the penalty bit number indicated by the penalty parameter is a product of the second penalty parameter and the preset pixel depth.

In an embodiment, the encoding end can obtain the estimated bit number after being subjected to the first operation by performing calculation according to the following formulas (4) to (6):

$$\mathrm{ExtraBufferPenaltyLog2=MIN\ (\ RemainBlksLog2,\ ExtraBufferPenaltyLog2\ )}$$

Formula (4)

In Formula (4), ExtraBufferPenaltyLog2 is the base-2 logarithm of the second penalty parameter. When the value thereof is 3, it means that the number of blocks to be encoded that is expected to consume the number of bits in the additional buffer is 8. ExtraBufferPenaltyLog2 is used to adjust the penalty strength. The larger the value, the smaller the penalty strength, which affects the penalty bit number of all blocks. RemainBlksLog2 is the base-2 logarithm of the number of remaining blocks to be encoded, with the minimum value being 0.

When ExtraBufferPenaltyLog2 is equal to 2,

$$\mathrm{TargetRate=Max(0,\ TargetRate\ -\ ((ExtraBufferThreshold-availableBuffer))}$$

Formula (5)

When ExtraBufferPenaltyLog2 is less than 2,

$$\mathrm{TargetRate=Max(0,\ TargetRate\ -\ ((ExtraBufferThreshold-availableBuffer)<<ExtraBufferPenaltyLog2))}$$

Formula (6)

S103: performing, by the encoding end, encoding on the current block to be encoded based on the estimated bit number after the first operation has been performed.

For example, the encoding end can determine the quantization parameter of the current block to be encoded based on the estimated bit number after being subjected to the first operation, and perform encoding on the current block to be encoded based on the quantization parameter. The specific process thereof can refer to the above-mentioned description of the encoding and decoding system, and will not be repeated here.

In some possible embodiments, if LosslessFlag is equal to 1, the quantization parameters Qp[0] and Qp[1] of the luminance encoding block and the chrominance encoding block of the current encoding unit (i.e. the current block to be encoded mentioned above) are both 0; if LosslessFlag is not equal to 1, the quantization parameter MasterQp of the encoding unit is firstly calculated based on the luminance complexity level, ComplexityLevel[0], and chrominance complexity level, ComplexityLevel[1], of the current encoding unit, and then the quantization parameters Qp[0] and Qp[1] of the luminance encoding block and chrominance encoding block of the current encoding unit are calculated based on MasterQp.

The specific process of calculating the quantization parameter MasterQp of the encoding unit based on the luminance complexity level, ComplexityLevel[0], and chrominance complexity level, ComplexityLevel[1], of the current encoding unit is as follows:

```
physicalBufferLevelPrev = PhysicalBufferLevelRecord[CurrPos]
rcBufferLevelPrev = physicalBufferLevelPrev + (VirtualEndStuff < ExtraBufferSize ? 0 : VirtualEndStuff -
ExtraBufferSize)
avgLosslessBits = AvgLosslessBitsRecord[CurrPos]
bppAdj = (EndTargetFullness - physicalBufferLevelPrev) << 7
bppAdj = bppAdj >= 0 ? bppAdj >> (5 + RemainBlksLog2) : - ((- bppAdj) >> (5 + RemainBlksLog2))
bppAdj = Clip3((- 512, 1536, bppAdj)
bpp = (bpp << 3) + bppAdj
shiftCurr = FullnessCalcShift - 7
Fullness = (rcBufferLevelPrev × FullnessCalcMultiplier + ((1 << shiftCurr) >> 1)) >> shiftCurr
bitsOffset = BitsOffset + (341 - ((43 × bpp) >> 7)
bitsOffset = Max(bitsOffset, 0)
tmp = (avgLosslessBits >> 7) - bitsOffset
tmp = Clip3 (1, 32, ((tmp >> 5) + 1) >> 1)
infoRatio = (bpp × InverseTable[tmp - 1] + 256) >> 9
if (image_format == '000') {   /* YUV400 */
CuComplexityLevel = ComplexityLevel[0]
} else if (image_format == '001') {   /* YUV420 */
CuComplexityLevel = ComplexityDivide3Table[ComplexityLevel[1] + (ComplexityLevel[0] << 1)]
} else if (image_format == '010') {   /* YUV422 */
CuComplexityLevel = (ComplexityLevel[0] + ComplexityLevel[1]) >> 1
} else if (image_format == '011' || image_format == '100') {   /* YUV444 or RGB444 */
infoRatio = infoRatio > ((77 × (2 + ChromaSampleRate)) >> 1) ? (77 × (2 + ChromaSampleRate)) >> 1 : infoRatio
CuComplexityLevel = ComplexityDivide3Table[ComplexityLevel[0] + (ComplexityLevel[1] << 1)]
}
losslessBits = LosslessBitsRecord[CurrPos][CuComplexityLevel]
relativeLosslessBits = Clip3(0, 320, MaxLosslessBits - losslessBits)
tmp = (BppParam × bpp + 512)) >> 10
minRate1 = (tmp × Min(MaxLosslessBits, losslessBits) + 64) >> 7
tmp = 160 × Fullness
tmp = ((tmp << 7) + 1024) >> 11
tmp = (192 - tmp) × bpp
minRate2 = ((minRate2 << 7) + 8192) >> 14
tmp = ((Fullness - 109) × 32 + 8) >> 4
tmp = bpp - tmp
minRate3 = tmp - (relativeLosslessBits × (2 + ChromaSampleRate)) >> 1
```

```
minRate = Max(Max(minRate1, minRate2), minRate3)
tmp = 1121 - (((( Fullness ×1083) << 7) + 8192) >> 14)
bppOffset1 = tmp - (((ChromaSampleRate + 2) × relativeLosslessBits + 1) >> 1)
bppOffset2 = Max(1536 - bpp, 512) - relativeLosslessBits
bppOffset3 = 1554 - ((((457 × Fullness) << 7) + 2048) >> 12)
bppOffset = Min(Min(bppOffset1, bppOffset2), bppOffset3)
if (CbPosY[0] == CurrSlicePosY) {
bppOffset = Max(bppOffset, -128)
}
maxRate = Max(bpp + bppOffset, minRate)
TargetRate = (infoRatio × Max(0, losslessBits - bitsOffset) + 64) >> 7
TargetRate = Clip3(minRate, maxRate, TargetRate)
availableBuffer = MaxBufferSize - rcBufferLevelPrev + ((bpp << 4) + (bpp << 3) - TargetRate -
TargetRateRecord[(CurrPos + 1) % 3] - TargetRateRecord[(CurrPos + 2) % 3]) >> 2;
if (VirtualEndStuff > 0) {
ExtraBufferThreshold = Max(0, ExtraBufferThreshold - (1 << ExtraBufferDecreaseStepLog2))
}
if (available_buffer < ExtraBufferThreshold) {
TargetRate = Max(0, TargetRate - ((ExtraBufferThreshold - availableBuffer) >> (ExtraBufferPenaltyLog2 -
2)));
}
tmp = (TargetRate × InvElem + ((1 << InvElemShift) >> 1)) >> InvElemShift
MasterQp = (losslessBits - tmp) << 3
```

InverseTable and ComplexityDivide3Table are defined as: InverseTable = {1024, 512, 341, 256, 205, 171, 146, 128, 114, 102, 93, 85, 79, 73, 68, 64, 60, 57, 54, 51, 49, 47, 45, 43, 41, 39, 38, 37, 35, 34, 33, 32}, ComplexityDivide3Table = { 0, 0, 0, 1, 1, 1, 2, 2, 2, 3, 3, 3, 4}.

Table 1 is looked up based on the luminance complexity level ComplexityLevel[0] and chrominance complexity level ComplexityLevel[1] of the current encoding unit to obtain BiasInit, and then the luminance quantization parameter Qp [0] and the chrominance quantization parameters QP [1] and QP [2] are calculated.

$$Bias = (BiasInit \times FormatBias) >> 1$$

$$tmp = ChromaSampleRate \times Bias$$

$$tmp = ((tmp << 7) + 128) >> 8$$

$$Qp[0] = Clip3(0, MaxQp[0], (MasterQp - tmp) >> 7)$$

$$Qp[1] = Clip3(0, MaxQp[1], (MasterQp + Bias) >> 7)$$

$$Qp[2] = Qp[1]$$

Table 1

| ComplexityLevel[0] | 0 | | | | |
|---|---|---|---|---|---|
| ComplexityLevel[1] | 0 | 1 | 2 | 3 | 4 |
| BiasInit | 6 | 6 | 7 | 8 | 9 |
| ComplexityLevel[0] | 1 | | | | |
| ComplexityLevel[1] | 0 | 1 | 2 | 3 | 4 |
| BiasInit | 6 | 6 | 6 | 7 | 8 |

(continued)

| | | | | | |
|---|---|---|---|---|---|
| ComplexityLevel[0] | 2 | | | | |
| ComplexityLevel[1] | 0 | 1 | 2 | 3 | 4 |
| BiasInit | 4 | 6 | 6 | 6 | 7 |
| ComplexityLevel[0] | 3 | | | | |
| ComplexityLevel[1] | | | | | |
| BiasInit | 2 | 4 | 6 | 6 | 6 |
| ComplexityLevel[0] | 4 | | | | |
| ComplexityLevel[1] | 0 | 1 | 2 | 3 | 1 |
| BiasInit | 0 | 2 | 4 | 6 | 6 |

In other possible embodiments, before each of the slices is encoded, WarmUp array of a code control, EndTargetFullness parameter and ExtraBufferThreshold parameter are also necessary to be initialized. The specific process is as follows:

```
for(j=0; j<5; j++) {
WarmUp[j] = 4
}
EndTargetFullness = ((DelayBits - (3 × (SubstreamSegmentSize - 1))) × 3) >> 2
ExtraBufferThreshold = ExtraBufferSize
```

Then, Table 2 is looked up based on the bit depth BitDepth[0] and the image format ImageFormat of the image where the current block to be encoded is located to obtain initialization values of LosslessBits[i], AvgLosslessBits, BitsOffset, MaxLosslessBits and BppParam.

Table 2

| BitDepth[0] | 8bit | | 10bit | | 12bit | | 14bit | | 16bit | |
|---|---|---|---|---|---|---|---|---|---|---|
| ImageFormat | RGB444 | other | RGB444 | other | RGB444 | other | RGB444 | other | RGB444 | other |
| LosslessBits[0] | 128 | 128 | 744 | 674 | 873 | 805 | 1001 | 936 | 1129 | 1064 |
| LosslessBits[1] | 595 | 580 | 815 | 818 | 1097 | 1037 | 1225 | 1165 | 1353 | 1293 |
| LosslessBits[2] | 682 | 680 | 929 | 910 | 1159 | 1173 | 1287 | 1301 | 1415 | 1429 |
| LosslessBits[3] | 791 | 770 | 1008 | 976 | 1271 | 1267 | 1399 | 1395 | 1527 | 1523 |
| LosslessBits[4] | 900 | 850 | 1060 | 1038 | 1339 | 1316 | 1467 | 1444 | 1595 | 1572 |
| AvgLosslessBits | 704 | 640 | 896 | 832 | 1024 | 960 | 1152 | 1088 | 1216 | 1216 |
| BitsOffset | 64 | 0 | 320 | 256 | 448 | 384 | 640 | 576 | 768 | 768 |
| MaxLosslessBits | 1050 | 922 | 1152 | 1088 | 1280 | 1216 | 1536 | 1472 | 1728 | 1728 |
| BppParam | 112 | 128 | 102 | 108 | 92 | 97 | 77 | 80 | 68 | 68 |

Table 3 is looked up based on ImageFormat to obtain initialization values of ChromaSampleRate, InvElem, InvElemShift and FormatBias.

Table 3

| ImageFormat | YUV400 | YUV420 | YUV422 | RGB444 | YUV444 |
|---|---|---|---|---|---|
| ChromaSampleRate | 0 | 1 | 2 | 1 | 4 |
| InvElem | 1 | 85 | 1 | 85 | 85 |
| InvElemShift | 0 | 7 | 1 | 8 | 8 |

(continued)

| ImageFormat | YUV400 | YUV420 | YUV422 | RGB444 | YUV444 |
|---|---|---|---|---|---|
| FormatBias | 0 | 114 | 85 | 128 | 57 |

Parameters LosslessBitsRecord[i][j], AvgLosslessBitsRecord[i], PhysicalBufferLevelRecord[i] and CurrPos are initialized as follows:

```
for (i=0; i<3; i++) {
for (j=0; i<5; j++) {
LosslessBitsRecord[i][j] = LosslessBits[j]
}
AvgLosslessBitsRecord[i] = AvgLosslessBits
PhysicalBufferLevelRecord[i] = DelayBits
}
CurrPos = 0
```

In some embodiments, the method may further include: encoding, by the encoding end, the first penalty parameter and the second penalty parameter into the code stream of the encoding block.

In the image encoding method provided by the embodiment of the present application, in response to the state of the code stream buffer satisfying a preset condition, the encoding end can perform the first operation on the estimated bit number of the current block to be encoded, so as to reduce the predicted estimated bit number of encoding the current block to be encoded, the estimated bit number is inversely proportional to a quantization parameter, and the quantization parameter is inversely proportional to the code rate of the encoding. Therefore, the estimated bit number is reduced, the code rate when encoding the current block to be encoded is also reduced at the same time, thus avoiding overflow of the code stream buffer caused when a state of a code stream buffer of a history block is utilized by a high-speed video transmission interface to control the encoding code rate of the current block to be encoded.

Correspondingly, an embodiment of the present application further provides an image decoding method. Fig. 8 is a schematic flowchart of an image decoding method provided by an embodiment of the present application. As shown in Fig. 8, the image decoding method includes S201 to S203.

S201: acquiring, by the decoding end, the state of the code stream buffer.

Wherein, the code stream buffer is configured for storing a code stream obtained after a block to be decoded is decoded. The state of the code stream buffer is the number of bits in the code stream buffer after a M-th block to be decoded counted backward from the current block to be decoded is decoded.

In an embodiment, the code stream buffer may include a main buffer and an additional buffer. The main buffer and the additional buffer are different physical storage partitions, or different logical storage partitions.

S202: in response to the state of the code stream buffer satisfying a preset condition, performing, by the decoding end, a first operation on the estimated bit number of the current block to be decoded.

Wherein, the estimated bit number is the number of bits required for decoding the current block to be decoded which is predicted in the state of the code stream buffer. The first operation refers to reducing the estimated bit number by a penalty bit number indicated by the penalty parameter.

In an embodiment, the preset condition may be that a size of an available buffer determined based on the state of the code stream buffer is smaller than the available space in the additional buffer, in which case, the above S202 may specifically include the following three steps:

Step 1: determining, by the decoding end, a size of the available buffer based on the state of the code stream buffer.

The size of the available buffer is configured to characterize a predicted available size of the code stream buffer after the current block to be decoded is decoded by using the estimated bit number.

For example, the decoding end can determine the size of the available buffer based on the state of the code stream buffer, the estimated bit number of the current block to be decoded, and respective estimated bit numbers of the M blocks to be decoded before the current block to be decoded.

In a possible implementation, the above step 1 may specifically include: acquiring, by the decoding end, the estimated bit numbers of M blocks to be decoded before the current block to be decoded; determining, by the decoding end, the size of the available buffer based on a sum of the code stream buffer and a reference variation value.

Wherein, the reference variation value is a difference between a fixed inflow bit number of M+1 blocks in the code stream buffer and an estimated outflow bit number of M+1 blocks in the code stream buffer. The fixed inflow bit number of the M+1 blocks in the code stream buffer is a product of the number of pixel points of each block to be decoded, a preset pixel depth and M+1. The estimated outflow bit number of the M+1 blocks in the code stream buffer is a sum of an estimated bit number of the current block to be decoded and the respective estimated bit numbers of M blocks to be decoded before the current block to be decoded.

In an embodiment, for any historical block that is any one of the M blocks to be decoded before the block to be decoded, the decoding end can directly acquire an estimated bit number acquired in response to decoding this historical block.

In an embodiment, for the any historical block, the decoding end can also acquire a complexity level of the historical block and a complexity level of the current block to be decoded, and determine an estimated bit number of the historical block based on a quotient of the complexity level of the historical block and a reference value.

Wherein the reference value is a product of the complexity level of the current block to be decoded and an estimated bit number of the current block to be decoded.

Step 2, acquiring, by the decoding end, an additional buffer threshold.

Wherein the additional buffer threshold is configured to characterize an available space of the additional buffer.

In a possible implementation, the penalty parameter may include a first penalty parameter. In this case, the above step 2 may specifically include: in response to the current block to be decoded being an ending block of a slice where the current block to be decoded is located, determining, by the decoding end, the additional buffer threshold based on a difference between an initial size of the additional buffer and a reference product.

Wherein, the ending block is a block to be decoded which needs to be filled with preset placeholder bits.

In an embodiment, in response to the current block to be decoded being a block to be decoded other than the ending block, the additional buffer is set to the initial size of the additional buffer.

In an embodiment, before the above step 1, the method may further include: parsing, by the decoding end, the code stream stored in the code stream buffer to obtain the first penalty parameter.

In another possible implementation, the decoding end can directly determine the initial size of the additional buffer as the additional buffer threshold.

Step 3, in response to the size of the available buffer being smaller than the additional buffer threshold, performing, by the decoding end, the first operation on the estimated bit number of the current block to be decoded.

In a possible implementation, the penalty parameter further includes a second penalty parameter, which is the number of blocks to be decoded that is expected to consume the number of bits in the additional buffer. In this case, before performing, by the decoding end, the first operation on the estimated bit number of the current block to be decoded, the method further includes: parsing, by the decoding end, the code stream stored in the code stream buffer to obtain the second penalty parameter; acquiring, by the decoding end, the number of remaining blocks to be decoded in the slice where the current block to be decoded is located; wherein in response to the number of the remaining blocks to be decoded being less than the second penalty parameter, in the first operation performed on the estimated bit number of the current block to be decoded, the penalty bit number indicated by the penalty parameter is a product of the number of the current remaining blocks to be decoded and a preset pixel depth.

In another possible implementation, in response to the number of the current remaining blocks to be decoded being greater than the second penalty parameter, in the first operation performed on the estimated bit number of the current block to be encoded, the penalty bit number indicated by the penalty parameter is a product of the second penalty parameter and the preset pixel depth.

S203: performing, by the decoding end, decoding on the current block to be decoded based on the estimated bit number after the first operation has been performed.

For example, the decoding end can determine the quantization parameter of the current block to be decoded based on the estimated bit number after being subjected to the first operation, and perform decoding on the current block to be decoded based on the quantization parameter. The specific process thereof can refer to the above-mentioned description of the decoding system, and will not be repeated here.

Based on the understanding of Fig. 8, an image decoding method provided by an embodiment of the present application may specifically include the following steps:

a) the decoding end parses the state of the code stream buffer (or related information of the additional buffer);

b) the decoding end decodes complexity information;

c) the decoding end calculates quantization parameters;

Steps a)-c) can be referred to as described in the decoding methods described above, and will not be repeated here.

d) the decoding end performs parsing to obtain the residual coefficient based on the prediction mode and the quantization parameter.

e) the decoding end obtains, based on the prediction mode, the prediction values of individual pixel points of the current block to be decoded (or unit to be decoded);

f) the decoding end performs decoding, based on the residual coefficient, to obtain the residual values of individual pixel points of the current block to be decoded (or unit to be decoded);

g) the decoding end obtains a reconstructed value thereof based on the predicted values and residual values of individual pixel points of the current block to be decoded (or unit to be decoded).

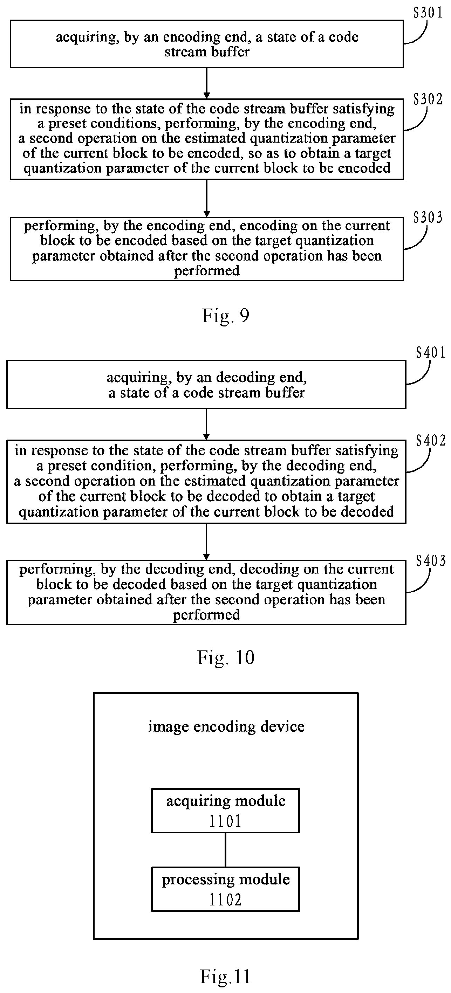

In some possible embodiments, the code rate can also be reduced by revising the quantization parameters. Fig. 9 is a schematic flowchart of another image encoding method provided by an embodiment of the present application. As shown in Fig. 9, the image encoding method includes S301 to S303.

S301: acquiring, by an encoding end, a state of a code stream buffer.

The code stream buffer is configured for storing a code stream obtained after a block to be encoded is encoded. The state of the code stream buffer is the number of bits in the code stream buffer after the M-th block to be encoded counted backward from the current block to be encoded is encoded.

In a possible implementation, the code stream buffer may include a main buffer and an additional buffer. Both the main buffer and the additional buffer are configured to store the code stream obtained after the block to be encoded is encoded. The main buffer and the additional buffer can be different physical storage partitions or different logical storage partitions.

S302: in response to the state of the code stream buffer satisfying a preset conditions, performing, by the encoding end, a second operation on the estimated quantization parameter of the current block to be encoded, so as to obtain a target quantization parameter of the current block to be encoded.

The estimated quantization parameter is obtained based on the estimated bit number, and the estimated bit number is the number of bits required for encoding the current block to be encoded which is predicted in the state of the code stream buffer. The second operation refers to increasing the estimated quantization parameter by a reference quantization parameter, with the reference quantization parameter being determined based on the penalty bit number indicated by the penalty parameter.

In an embodiment, S302 may specifically include the following three steps:

Step 1: determining, by the encoding end, a size of the available buffer based on the state of the code stream buffer.

Step 2, acquiring, by the encoding end, an additional buffer threshold.

It should be noted that Steps 1 and 2 specifically included in S302 can refer to the above description of Steps 1 and 2 specifically included in S 101, and will not be repeated here.

Step 3, in response to the size of the available buffer being smaller than the additional buffer threshold, performing, by the encoding end, a second operation on the estimated quantization parameter of the current block to be encoded.

In a possible implementation, the penalty parameter further includes a second penalty parameter, which is the number of blocks to be encoded that is expected to consume the number of bits in the additional buffer. In this case, before performing, by the encoding end, the second operation on the estimated quantization parameter of the current block to be encoded, the method further includes: acquiring, by the encoding end, the number of remaining blocks to be encoded in the slice where the current block to be encoded is located; wherein in response to the number of the remaining blocks to be encoded being less than the second penalty parameter, in the second operation performed on the estimated quantization parameter of the current block to be encoded, the penalty bit number indicated by the penalty parameter is a product of the number of the current remaining blocks to be encoded and a preset pixel depth.

In another possible implementation, in response to the number of the current remaining blocks to be encoded being greater than the second penalty parameter, in the second operation performed on the estimated quantization parameter of the current block to be encoded, the penalty bit number indicated by the penalty parameter is a product of the second penalty parameter and the preset pixel depth.

In an embodiment, performing, by the encoding end, the second operation on the estimated quantization parameter of the current block to be encoded, may include: determining, by the encoding end, a penalty bit number based on a product of the second penalty parameter and the preset pixel depth; determining, by the encoding end, the reference quantization parameter based on the penalty bit number; determining, by the encoding end, the target quantization parameter of the current block to be encoded based on a sum of the estimated quantization parameter and the reference quantization parameter.

The process of determining, by the encoding end, the reference quantization parameter based on the penalty bit number can refer to the above description of the process of determining the quantization parameter in some possible embodiments at S103, which is not repeated here.

In an embodiment, the encoding end can obtain the penalty bit number by performing calculation according to the following formula (7):

$$\mathrm{DeltaRate=(ExtraBufferThreshold-availableBuffer)\gg(ExtraBufferPenaltyLog2-2)}$$

Formula (7)

In formula (7), DeltaRate is the penalty bit number.

In an embodiment, the specific process of the encoding end obtaining the reference quantization parameter by performing calculation according to the penalty bit number is as follows:

tmp = (DeltaRate × InvElem + ((1 << InvElemShift) >> 1)) >> InvElemShift MasterQp = (losslessBits - tmp) << 3

InverseTable and ComplexityDivide3 Table are defined as: InverseTable = {1024, 512, 341, 256, 205, 171, 146, 128, 114, 102, 93, 85, 79, 73, 68, 64, 60, 57, 54, 51, 49, 47, 45, 43, 41, 39, 38, 37, 35, 34, 33, 32}, ComplexityDivide3Table = { 0, 0, 0, 1, 1, 1, 2, 2, 2, 3, 3, 3, 4 }.

Table 1 is looked up based on the luminance complexity level ComplexityLevel[0] and chrominance complexity level ComplexityLevel[1] of the current encoding unit to obtain BiasInit, and then the reference luminance quantization parameter AdjQp[0] and the reference chrominance quantization parameters AdjQp[1],AdjQp[2] are calculated.

$$\mathrm{Bias = (BiasInit \times FormatBias) \gg 1}$$

$$\mathrm{tmp = ChromaSampleRate \times Bias}$$

$$\mathrm{tmp = ((tmp \ll 7) + 128) \gg 8}$$

$$\mathrm{AdjQp[0] = Clip3(0, MaxQp[0], (MasterQp - tmp) \gg 7)}$$

$$\mathrm{AdjQp[1] = Clip3(0, MaxQp[1], (MasterQp + Bias) \gg 7)}$$

$$\mathrm{AdjQp[2] = Qp[1]}$$

In an embodiment, the encoding end can obtain the target quantization parameter of the current block to be encoded according to the following formula (8).

$$\mathrm{QP[i]=Clip3(0,MaxQp[i],BaseQP[i]+AdjQP[i])}$$

Formula (8)

In Formula (8), QP[i] is the target quantization parameter of the current block to be encoded. BaseQP[i] is the estimated quantization parameter of the current block to be encoded. AdjQP[i] is the reference quantization parameter, and i is 0, 1 or 2.

S303: performing, by the encoding end, encoding on the current block to be encoded based on the target quantization parameter obtained after the second operation has been performed.

The specific process of S303 can refer to the above description of the encoding and decoding system, and will not be repeated here.

In the image encoding method provided by the embodiment of the present application, in response to the state of the code stream buffer satisfying a preset condition, the encoding end can perform the second operation on the estimated quantization parameter of the current block to be encoded, so as to obtain the target quantization parameter after increasing the reference quantization parameter, and the quantization parameter is inversely proportional to the code rate of the encoding; therefore, the quantization parameter is increased, the code rate when encoding the current block to be encoded is reduced at the same time, thus avoiding overflow of the code stream buffer caused when a state of a code stream buffer of a history block is utilized by a high-speed video transmission interface to control the encoding code rate of the current block to be encoded.

Correspondingly, an embodiment of the present application further provides an image decoding method. Fig. 10 is a schematic flowchart of another image decoding method provided by an embodiment of the present application. As shown in Fig. 10, the image decoding method includes S401 to S403.

S401: acquiring, by an decoding end, a state of a code stream buffer.

The code stream buffer is configured for storing a code stream of the block to be decoded. The state of the code stream buffer is the number of bits in the code stream buffer after the M-th block to be decoded counted backward from the current block to be decoded is decoded.

In an embodiment, the code stream buffer may include a main buffer and an additional buffer. The main buffer and the additional buffer are different physical storage partitions, or different logical storage partitions.

S402: in response to the state of the code stream buffer satisfying a preset condition, performing, by the decoding end, a second operation on the estimated quantization parameter of the current block to be decoded to obtain a target quantization parameter of the current block to be decoded.

Wherein, the estimated bit number is the number of bits required for decoding the current block to be decoded which is predicted in the state of the code stream buffer. The first operation refers to reducing the estimated bit number by a penalty bit number indicated by the penalty parameter.

In an embodiment, S402 may specifically include the following three steps:

Step 1: determining, by the decoding end, a size of the available buffer based on the state of the code stream buffer.

Step 2, acquiring, by the decoding end, an additional buffer threshold.

It should be noted that Steps 1 and 2 specifically included in S402 can refer to the above description of Steps 1 and 2 specifically included in S202, and will not be repeated here.

Step 3: in response to the size of the available buffer being smaller than the additional buffer threshold, performing, by the decoding end, a second operation on the estimated quantization parameter of the current block to be decoded to obtain the target quantization parameter of the current block to be decoded.

In a possible implementation, the penalty parameter further includes a second penalty parameter, which is the number of blocks to be decoded that is expected to consume the number of bits in the additional buffer. In this case, before performing, by the decoding end, the second operation on the estimated quantization parameter of the current block to be decoded, the method further includes: parsing, by the decoding end, the code stream stored in the code stream buffer to obtain the second penalty parameter; acquiring, by the decoding end, the number of remaining blocks to be decoded in the slice where the current block to be decoded is located; wherein in response to the number of the remaining blocks to be decoded being less than the second penalty parameter, in the second operation performed on the estimated quantization parameter of the current block to be decoded, the penalty bit number indicated by the penalty parameter is a product of the number of the current remaining blocks to be decoded and a preset pixel depth.

In another possible implementation, in response to the number of the current remaining blocks to be decoded being greater than the second penalty parameter, in the second operation performed on the estimated quantization parameter of the current block to be decoded, the penalty bit number indicated by the penalty parameter is a product of the second penalty parameter and the preset pixel depth.

In an embodiment, performing, by the decoding end, the second operation on the estimated quantization parameter of the current block to be decoded, may include: determining, by the decoding end, a penalty bit number based on a product of the second penalty parameter and the preset pixel depth; determining, by the decoding end, the reference quantization parameter based on the penalty bit number; determining, by the decoding end, the target quantization parameter of the current block to be decoded based on a sum of the estimated quantization parameter and the reference quantization parameter.

The process of determining, by the decoding end, the penalty bit number based on the product of the second penalty parameter and the preset pixel depth can refer to the above formula (7), and will not be repeated here. The process of determining by the decoding end the reference quantization parameter based on the penalty bit number can refer to the above-mentioned description of the process of determining the quantization parameter in some possible embodiments at S103, and will not be repeated here. The process of determining, by the decoding end, the reference quantization parameter based on the penalty bit number can refer to the code at step 3 in S302, and will not be repeated here. The decoding end determining the target quantization parameter of the current block to be decoded based on the sum of the estimated quantization parameter and the reference quantization parameter can refer to the above formula (8), and will not be repeated here.

S403: performing, by the decoding end, decoding on the current block to be decoded based on the target quantization parameter obtained after the second operation has been performed.

The specific process of S403 can refer to the above-mentioned description of the encoding and decoding system, and will not be repeated here.

In some possible embodiments, the encoding end can enable a function of substream parallelism. When the function of substream parallelism is enabled, the encoding end can perform encoding on different channels of the current block to be encoded to obtain multiple substreams by using multiple entropy encoders (modules), and fill the multiple substreams into substream buffers corresponding to them respectively, and interleave the substreams in the substream buffers into the code stream in accordance with a preset interleaving rule.

It should be noted that, considering the dependence between the substreams, the speeds of filling the substreams in different substream buffers are different, and the substream buffer with faster filling speed during a same period is filled with more substream bits than the substream buffer with slower filling speed. In order to ensure the integrity of filled data, it is necessary to set all the substream buffers to be larger, which increases the hardware cost. In order to save the hardware cost, an anti-expansion mode is proposed, which represents the mode with the largest bit cost among all the prediction modes. Usually, the mode with the largest bit cost refers to an encoding mode in which the original pixel value of the current block to be encoded is directly encoded.

In an embodiment, for an image with N channels, the respective bit depths (bitDepth) of the N channels can be different. When encoding the image with N channels, in response to an anti-expansion mode being selected for a block to be encoded through rate distortion optimization (the anti-expansion mode participates in the rate distortion optimization), or an optimal mode selected for a block to be encoded through the rate distortion optimization having a larger bit cost than that of the anti-expansion mode (anti-expansion mode does not participate in the rate distortion optimization), in order to save hardware cost and prevent the substream buffer from expanding, the encoding end will select the anti-expansion mode at this time, and the bit cost of the anti-expansion mode is the cost obtained by performing encoding on the N channels according to the bit depth of the channel with the smallest bit depth among the N channels, that is, the encoding of some channels is lossy.

Based on the above understanding, an embodiment of the present application further provides another image encoding method, which includes: performing, by an encoding end, encoding on blocks to be encoded of the luminance channel, blocks to be encoded of the first chrominance channel and blocks to be encoded of the second chrominance channel based on a bit depth of the luminance channel according to the anti-expansion mode.

It should be understood that converting RGB into YCoCg format will cause the bit depth of a Co channel and a Cg channel to be 1 bit more than that of a Y channel. The embodiment of the present application specifies that in the anti-expansion mode, the blocks to be encoded of Y channel, the blocks to be encoded of Co channel and the blocks to be encoded of Cg channel are encoded with the bit depth of Y channel, so that the overall estimated bit number of the encoding blocks of the three channels is small, thus reducing the overflow of the code stream buffer caused when a state of a code stream buffer of a history block is utilized by a high-speed video transmission interface to control the encoding code rate of the current block to be encoded.

Correspondingly, an embodiment of the present application further provides yet another image decoding method, which includes: parsing, by a decoding end, a code stream of a block to be decoded to obtain a mode flag; wherein the mode flag is configured to indicate an encoding mode used when a block to be encoded is encoded; in response to the encoding mode indicated by the mode flag being an anti-expansion mode, performing, by the decoding end, decoding on the current block to be decoded based on a bit depth of a luminance channel and the anti-expansion mode.

In an embodiment, substreams of each of the channels are transmitted through different substream buffers under the condition that the function of substream parallelism is enabled, and quantization parameters are obtained by being derived and there is no need to be transmitted. In this case, the luminance channel transmits complexity information of luminance, a first chrominance channel transmits a first relation tag of the complexity information of the luminance and the first chrominance, the first relation tag is configured to indicate a relationship between the magnitude of the complexity information of the first chrominance channel and the complexity information of the luminance, a second chrominance channel transmits a second relation tag of the complexity information of the luminance and the second chrominance, and the second relation tag is configured to indicate a relationship between the magnitude of the complexity information of the second chrominance and the complexity information of the luminance.

For example, the complexity information of the luminance includes five categories: 0, 1, 2, 3, or 4. The first relation tag transmitted in the first chrominance channel may include 0, 1, or 2, where 0 indicates that the complexity information of the first chrominance is consistent with that of the luminance, 1 indicates that the complexity information of the first chrominance is smaller than that of the luminance, and 2 indicates that the complexity information of the first chrominance is larger than that of the luminance. The second relation tag transmitted in the second chrominance channel may include 0, 1, or 2, where 0 indicates that the complexity information of the second chrominance is consistent with that of the luminance, 1 indicates that the complexity information of the second chrominance is smaller than that of the luminance, and 2 indicates that the complexity information of the second chrominance is larger than that of the luminance.

Changes in complexity information will affect the code rate control in two ways:

1. determining the complexity level of the current block to be encoded (or it can also be referred to as an encoding unit).

2. determining the quantization parameter of each of the channels.

Based on the above understanding, an embodiment of the present application further provides yet another image encoding method, which includes the following steps:

Step 1, acquiring, by the encoding end, a current block to be encoded.

The current block to be encoded can also be understood as an encoding unit, which includes encoding blocks of three channels of YUV.

Step 2, acquiring, by the encoding end, complexity information of encoding blocks of each of the three channels.

The complexity information is configured to characterize a degree of difference in pixel values of encoding blocks of each of the channels. For example, the complexity information of encoding blocks of the luminance channel is configured to characterize the degree of difference in pixel values of the encoding blocks of the luminance channel; the complexity information of the encoding blocks of the first chrominance channel is configured to characterize the degree of difference in pixel values of the encoding blocks of the first chrominance channel; the complexity information of the encoding blocks of the second chrominance channel is configured to characterize the degree of difference in pixel values of the encoding blocks of the second chrominance channel;

Step 3, determining, by the encoding end, the complexity level of the current block to be encoded based on the complexity level of the encoding blocks of each of the channels.

In a possible implementation, the encoding end can directly take the complexity level of the encoding blocks of the luminance channel as the complexity level of the encoding unit, that is, CuComplexityLevel==ComplexityLevel[0].

In another possible implementation, if the complexity level of the encoding blocks of the luminance channel is 1, the complexity level of the encoding blocks of the first chrominance channel is 1-1 = 0; otherwise, if the complexity level of the encoding blocks of the luminance channel is 2, the complexity level of the encoding blocks of the first chrominance channel is 2+1 = 3; otherwise, the complexity level of the encoding blocks of the first chrominance channel is equal to that of the encoding blocks of the luminance channel. The complexity level of the encoding blocks of the second chrominance channel can be referred to the description of the complexity level of the encoding blocks of the first chrominance channel, and will not be repeated. The complexity level of the encoding unit is obtained by weighted averaging the complexity levels of the three channels acquired by the encoding end, and an average value of the complexity levels of the first chrominance and the second chrominance is taken as the complexity level of the chrominance.

In some possible embodiments, the method may further include: revising, by the encoding end, the quantization parameters of the three channels of YUV based on the complexity information of the first channel.

Wherein, the first channel is any one of the three channels of YUV.

For example, if the complexity information of the luminance channel is 1, the quantization parameter of the first chrominance channel is a difference between the quantization parameter of the luminance channel and an empirical value; otherwise, if the complexity information of the luminance channel is 2, the quantization parameter of the first chrominance channel is a sum of the quantization parameter of the luminance channel and an empirical value. The determination of the quantization parameter of the second chrominance channel can refer to the description of the process of determining the quantization parameter of the first chrominance channel described above, and will not be repeated.

For example, the empirical value can be 1.

Correspondingly, an embodiment of the present application further provides another image decoding method, which includes the following steps:

Step 1: parsing, by the decoding end, the luminance channel, to obtain the complexity information of the luminance channel.

Step 2, parsing, by the decoding end, the first chrominance channel to obtain the first relation tag.

Step 3, parsing, by the decoding end, the second chrominance channel to obtain the second relation tag.

Step 4, determining, by the decoding end, a complexity level of the luminance channel, a complexity level of the first chrominance channel and a complexity level of the second chrominance channel based on the complexity information of the luminance channel, the first relation tag and the second relation tag.

Step 5, determining, by the decoding end, a complexity level of the current block to be decoded based on the complexity level of the luminance channel, the complexity level of the first chrominance channel and the complexity level of the second chrominance channel.

In an embodiment, the method may further include: the decoding end determining the complexity information of the first chrominance channel and the complexity information of the second chrominance channel based on the complexity information of the luminance channel, the first relation tag and the second relation tag, and determining the quantization parameter of the luminance channel, the quantization parameter of the first chrominance channel and the quantization parameter of the second chrominance channel based on the complexity information of the luminance channel, the complexity information of the first chrominance channel and the complexity information of the second chrominance channel.

In some embodiments, an embodiment of the present application further provides a displacement quantization method to reduce the hardware cost and improve the programmable logic controller (PLC) standard competitiveness.

The existing quantization solution of the PLC standard is 8-point fractional quantization, the quantization step is Qstep=2^(QP/8), and a range of the value of QP is 0-8 × bitdepth-1.

The 8-point fractional quantization mainly includes the following three changes:

Change 1. aligning the QP derived by the code control to a multiple of 8.

The specific process of change 1 is as follows:

$$luma\_qp = ((luma\_qp + 3) >> 3) << 3;$$

$$chroma\_qp = ((chroma\_qp + 3) >> 3) << 3;$$

Where luma_qp and chroma_qp are the luminance and chrominance QPs derived by code control, luma_qp is lumaQP and Qp[0], chroma_qp is chromaQP, Qp[1] and Qp[2], and a rounding offset of 3 indicates that the alignment is rounded according to Qstep, as shown in Table 4 for details.

Table 4

| (QP%8) /8 | 0/8 | 1/8 | 2/8 | 3/8 | 4/8 | 5/8 | 6/8 | 7/8 | 8/8 |
|---|---|---|---|---|---|---|---|---|---|
| 2^((QP%8) /8) | 1.00 | 1.09 | 1.19 | 1.30 | 1.41 | 1.51 | 1.68 | 1.83 | 2.00 |
| Rounding of (QP%8) /8 | 0 | 0 | 0 | 0 | 0 | 1 | 1 | 1 | 1 |

Change 2, adaptively amending the parameters of the point-by-point quantization technology.

The adjustment of QP by point-by-point quantization technology includes the following two parts:

a) determining values of parameters jndQp, adjustMaxQp and resiThresjndQp based on BitDepth[component], and the specific process is as follows:

$$bdIdx = Clip3(0, 8, BitDepth[component] - 8)$$

$$jndQp = (bdIdx << 2) + 16 ((bdIdx >> 1) << 3) + 16$$

$$adjustMaxQp = ((bdIdx >> 1) << 3) + 32$$

$$resiThres = 10 << (bdIdx >> 1)$$

b) determining a quantization parameter PixelQp of a residual sample, the specific process is as follows:

1) if Qp[component] is greater than jndQp and Qp[component] is less than or equal to adjustMaxQp, and PredResiTmp is less than or equal to resiThres:

$$PixelQp = Max(Qp[component] - 4 8, jndQp)$$

2) otherwise, making PixelQp equal to Qp[component].

Change 3. the rounding operation in response to masterQP deriving luminance and chrominance QPs is changed from floor to round.

The specific process of change 3 is as follows:

$$Bias = (BiasInit × FormatBias) >> 1$$

$$tmp = ChromaSampleRate \times Bias$$

$$tmp = ((tmp << 7) + 128) >> 8$$

$$Qp[0] = Clip3(0, MaxQp[0], (MasterQp - tmp + 64) >> 7)$$

$$Qp[1] = Clip3(0, MaxQp[1], (MasterQp + Bias + 64) >> 7)$$

$$Qp[2] = Qp[1]$$

On this basis, embodiments of the present application provide two improved solutions of the displacement quantization:

Improved solution 1: two following modes are allowed to align the luminance and chrominance QPs to a multiple of 8. Mode 1: according to the method of Qstep rounding, please refer to the above 8-point fractional quantization for details, which is not repeated here.

Mode 2: aligning the luminance QP downward and the chrominance QP upward. This mode is only used to replace the case that both the luminance and chrominance QPs in mode 1 are aligned upward.

The principle of the selection of mode 1 or mode 2 is to ensure that the absolute value of the total variation of QPs is minimized; if the absolute values are equal, the method with negative variation is selected (distortion is preferred); if they are still equal, Mode 1 is selected. The specific selection process is shown in Table 5.

Table 5

table 5

| 1umaQP%8 | chromaQP%8 | total variation of QPs in mode 1 | total variation of QPs in mode 2 | final mode |
|---|---|---|---|---|
| 5 | 5 | (+3)+ (+3) * 2 = 9 | (-5) + (+3) * 2 = 1 | 2 |
|  | 6 | (+3) + (+2) * 2 = 7 | (-5) + (+2) * 2 = -1 | 2 |
|  | 7 | (+3) + (+1) * 2 = 5 | (-5) + (+1) * 2 = -3 | 2 |
| 6 | 5 | (+2) + (+3) * 2 = 8 | (-6) + (+3) * 2 = 0 | 2 |
|  | 6 | (+2) + (+2) * 2 = 6 | (-6) + (+2) * 2 = -2 | 2 |
|  | 7 | (+2) + (+1) * 2 = 4 | (-6) + (+1) * 2 = -4 | 2 |
| 7 | 5 | (+1) + (+3) * 2 = 7 | (-7) + (+3) * 2 = -1 | 2 |
|  | 6 | (+1) + (+2) * 2 = 5 | (-7) + (+2) * 2 = -3 | 2 |
|  | 7 | (+1) + (+1) * 2 = 3 | (-7) + (+1) * 2 = -5 | 1 |

Improved solution 2: a rounding operation on the chrominance QP is performed first, then a rounding error of the chrominance QP is compensated to the luminance QP, and then a rounding operation is performed on the luminance QP, thus reducing the rounding error of whole block to be encoded (or encoding unit). The specific process is shown in Table 6 below.

Table 6

| steps | initial solution | improved solution 2 |
|---|---|---|
| Step1 | calculating luminance QP, see Formula (9) | calculating chromaticity QP, see Formula (10) |
| Step2 | calculating chromaticity QP, see Formula (10) | rounding luminance QP |
| Step3 | rounding luminance QP | bring the rounded chromaticity QP into Formula (11) |

(continued)

| steps | initial solution | improved solution 2 |
|-------|------------------|---------------------|
| Slep1 | rounding luminance QP | rounding luminance QP |

$$lumaQP = masteQP - sampleRate * bias \qquad \text{Formula (9)}$$

$$chromaQP = masterQP + bias \qquad \text{Formula (10)}$$

$$lumaQP + sampleRate * chromaQP = (1 + sampleRate) * masteQP \qquad \text{Formula (10)}$$

The above mainly introduces the solution provided by the method embodiment of the present application. In order to realize the above functions, hardware structures and/or software modules corresponding to respective functions to be performed are contained. Those skilled in the art should readily realize that, the present application can be realize in the form of hardware or a combination of hardware and computer software in combination with units and algorithm steps in various example describe in the embodiments disclosed herein. Whether a particular function is performed in the form of hardware or computer software driving hardware depends on the specific application and design constraints of the technical solutions. Those skilled can use different methods to implement the described functions for each specific application, but such implementation should not be considered beyond the scope of the present application. In addition, it should be understood that different embodiments of the present application can be combined, and the protection scope of the new embodiment formed after combination is also within the protection scope of the present application and should not be considered beyond the scope of the present application.

In an exemplary embodiment, an embodiment of the present application further provides an image encoding device. Fig. 11 is a schematic diagram of a composition of an image encoding device provided by an embodiment of the present application. As shown in Fig. 11, the device includes an acquiring module 1101 and a processing module 1102.

The acquiring module 1101 is configured for acquiring a state of a code stream buffer; wherein the code stream buffer is configured for storing a code stream obtained after a block to be encoded is encoded; the state of the code stream buffer is a number of bits in the code stream buffer after a M-th block to be encoded counted backward from the current block to be encoded is encoded; M is a positive integer.

The processing module 1102 is configured for in response to the state of the code stream buffer satisfying a preset condition, performing a first operation on an estimated bit number of the current block to be encoded; wherein the estimated bit number is a number of bits required for encoding the current block to be encoded which is predicted in the state of the code stream buffer; the first operation refers to reducing the estimated bit number by a penalty bit number indicated by a penalty parameter; performing encoding on the current block to be encoded based on an estimated bit number after the first operation has been performed.

In some possible embodiments, the code stream buffer includes a main buffer and an additional buffer; the main buffer and the additional buffer are different physical storage partitions or different logical storage partitions.

In other possible embodiments, the processing module 1102 is specifically configured for determining a size of an available buffer based on the state of the code stream buffer; wherein the size of the available buffer is configured to characterize a predicted available size of the code stream buffer after the current block to be encoded is encoded by using the estimated bit number; acquiring an additional buffer threshold; wherein the additional buffer threshold is configured to characterize an available space in the additional buffer; in response to the size of the available buffer being smaller than the additional buffer threshold, performing the first operation on the estimated bit number of the current block to be encoded.

In yet some possible embodiments, the processing module 1102 is specifically configured for in response to the current block to be encoded being an ending block of a slice where the current block to be encoded is located, determining the additional buffer threshold based on a difference between an initial size of the additional buffer and a reference product; wherein the ending block is a block to be encoded which needs to be filled with preset placeholder bits; the reference product is a product of a reference ranking and the first penalty parameter; the reference ranking is a ranking of the current block to be encoded in the ending blocks; the first penalty parameter is a value by which the additional buffer threshold decreases every time the reference ranking is increased by one block to be encoded.

In yet some possible embodiments, in response to the current block to be encoded being a block to be encoded other than the ending block, the additional buffer threshold is set to the initial size of the additional buffer.

In yet some possible embodiments, before acquiring the additional buffer threshold, the acquiring module 1101 is further configured for acquiring the number of ending blocks; the processing module 1102 is further configured for determining the first penalty parameter based on the initial size of the additional buffer and the number of the ending blocks.

In yet some possible embodiments, the processing module 1102 is specifically configured for determining an initial size of the additional buffer as the additional buffer threshold.

In yet some possible embodiments, the processing module 1102 is specifically configured for acquiring estimated bit numbers of M blocks to be encoded before the current block to be encoded; determining the size of the available buffer based on a sum of the state of the code stream buffer and a reference variation value; wherein the reference variation value is a difference between a fixed outflow bit number of M+1 blocks in the code stream buffer and an estimated inflow bit number of the M+1 blocks in the code stream buffer; the fixed outflow bit number of the M+1 blocks in the code stream buffer is a product of a number of pixel points of each of blocks to be encoded, a preset pixel depth and M+1; the estimated inflow bit number of the M+1 blocks in the code stream buffer is a sum of the estimated bit number of the current block to be encoded and respective estimated bit numbers of M blocks to be encoded before the current block to be encoded.

In yet some possible embodiments, the processing module 1102 is specifically configured for acquiring a complexity level of the historical block and a complexity level of the current block to be encoded; determining an estimated bit number of the historical block based on a quotient of the complexity level of the historical block and a reference value; wherein the reference value is a product of the complexity level of the current block to be encoded and the estimated bit number of the current block to be encoded.

In yet some possible embodiments, the penalty parameter further includes a second penalty parameter; the second penalty parameter is the number of blocks to be encoded that is expected to consume the number of bits in the additional buffer; before performing the first operation on the estimated bit number of the current block to be encoded, the acquiring module 1101 is further configured for acquiring a number of remaining blocks to be encoded in the slice where the current block to be encoded is located; wherein in response to the number of the remaining blocks to be encoded being less than the second penalty parameter, in the first operation performed on the estimated bit number of the current block to be encoded, the penalty bit number indicated by the penalty parameter is a product of the number of the current remaining blocks to be encoded and a preset pixel depth.

In yet some possible embodiments, in response to the number of the current remaining blocks to be encoded being greater than the second penalty parameter, in the first operation performed on the estimated bit number of the current block to be encoded, the penalty bit number indicated by the penalty parameter is a product of the second penalty parameter and the preset pixel depth.

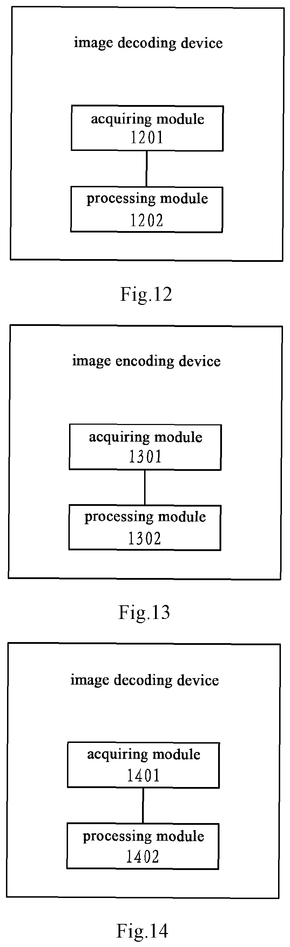

In an exemplary embodiment, the embodiment of the present application further provides an image decoding device. Fig. 12 is a schematic diagram of a composition of an image decoding device provided by an embodiment of the present application. As shown in Fig. 12, the device includes an acquiring module 1201 and a processing module 1202.

The acquiring module 1201 is configured for acquiring a state of a code stream buffer; wherein the code stream buffer is configured for storing a code stream obtained after a block to be decoded is decoded; the state of the code stream buffer is a number of bits in the code stream buffer after a M-th block to be decoded counted backward from the current block to be decoded is decoded; M is a positive integer.

The processing module 1202 is configured for in response to the state of the code stream buffer satisfying a preset condition, performing a first operation on an estimated bit number of the current block to be decoded; wherein the estimated bit number is a number of bits required for decoding the current block to be decoded which is predicted in the state of the code stream buffer; the first operation refers to reducing the estimated bit number by a penalty bit number indicated by a penalty parameter; performing decoding on the current block to be decoded based on an estimated bit number after the first operation has been performed.

In some possible embodiments, the code stream buffer includes a main buffer and an additional buffer; the main buffer and the additional buffer are different physical storage partitions, or different logical storage partitions.

In other possible embodiments, the processing module 1202 is specifically configured for determining a size of an available buffer based on the state of the code stream buffer; wherein the size of the available buffer is configured to characterize a predicted available size of the code stream buffer after the current block to be decoded is decoded by using the estimated bit number; acquiring an additional buffer threshold; wherein the additional buffer threshold is configured to characterize an available space in the additional buffer; in response to the size of the available buffer being smaller than the additional buffer threshold, performing the first operation on the estimated bit number of the current block to be decoded.

In yet some possible embodiments, the processing module 1202 is specifically configured for in response to the current block to be decoded being an ending block of a slice where the current block to be decoded is located, determining the additional buffer threshold based on a difference between an initial size of the additional buffer and a reference product; wherein the ending block is a block to be decoded which is filled with preset placeholder bits; the reference product is a product of a reference ranking and the first penalty parameter; the reference ranking is a ranking of the current block to be decoded in the ending blocks; the first penalty parameter is a value by which the size of the additional buffer decreases every time the reference ranking is increased by one block to be encoded.

In some possible embodiments, in response to the current block to be decoded being a block to be decoded other than the ending block, the additional buffer threshold is set to the initial size of the additional buffer.

In some possible embodiments, before acquiring the additional buffer threshold, the processing module 1202 is further configured for parsing a code stream stored in the code stream buffer to obtain the first penalty parameter.

In some possible embodiments, the processing module 1202 is specifically configured for determining an initial size of the additional buffer as the additional buffer threshold.

In yet some possible embodiments, the processing module 1202 is specifically configured for acquiring estimated bit numbers of M blocks to be decoded before the current block to be decoded; determining the size of the available buffer based on a sum of the state of the code stream buffer and a reference variation value; wherein the reference variation value is a difference between a fixed inflow bit number of M+1 blocks in the code stream buffer and an estimated outflow bit number of the M+1 blocks in the code stream buffer; the fixed inflow bit number of the M+1 blocks in the code stream buffer is a product of a number of pixel points of each of blocks to be decoded, a preset pixel depth and M+1; the estimated outflow bit number of the M+1 blocks in the code stream buffer is a sum of the estimated bit number of the current block to be decoded and respective estimated bit numbers of M blocks to be decoded before the current block to be decoded.

In yet some possible embodiments, before determining the size of the available buffer based on the sum of the state of the code stream buffer and the reference variation value, the acquiring module 1201 is further configured for acquiring a complexity level of the historical block and a complexity level of the current block to be decoded; wherein the historical block is any one of the M blocks to be decoded before the current block to be decoded; the processing module 1202 is further configured for determining an estimated bit number of the historical block based on a quotient of the complexity level of the historical block and a reference value; wherein the reference value is a product of the complexity level of the current block to be decoded and the estimated bit number of the current block to be decoded.

In yet some possible embodiments, the penalty parameter further includes a second penalty parameter; the second penalty parameter is the number of blocks to be decoded that is expected to consume the number of bits in the additional buffer; before performing the first operation on the estimated bit number of the current block to be decoded, the processing module 1202 is further configured for parsing the code stream stored in the code stream buffer to obtain the second penalty parameter; acquiring a number of remaining blocks to be decoded in the slice where the current block to be decoded is located; wherein in response to the number of the remaining blocks to be decoded being less than the second penalty parameter, in the first operation performed on the estimated bit number of the current block to be decoded, a penalty bit number indicated by the penalty parameter is a product of the number of the current remaining blocks to be decoded and a preset pixel depth.

In yet some possible embodiments, in response to the number of the current remaining blocks to be decoded being greater than the second penalty parameter, in the first operation performed on the estimated bit number of the current block to be decoded, the penalty bit number indicated by the penalty parameter is a product of the second penalty parameter and the preset pixel depth.

In an exemplary embodiment, the embodiment of the present application further provides another image encoding device. Fig. 13 is a schematic diagram of a composition of another image encoding device provided by an embodiment of the present application. As shown in Fig. 13, the device includes an acquiring module 1301 and a processing module 1302.

The acquiring module 1301 is configured for acquiring a state of a code stream buffer; wherein the code stream buffer is configured for storing a code stream obtained after a block to be encoded is encoded; the state of the code stream buffer is a number of bits in the code stream buffer after a M-th block to be encoded counted backward from the current block to be encoded is encoded; M is a positive integer;

The processing module 1302 is configured for in response to the state of the code stream buffer satisfying a preset conditions, performing a second operation on the estimated quantization parameter of the current block to be encoded, so as to obtain a target quantization parameter of the current block to be encoded; wherein the estimated quantization parameter is obtained based on the estimated bit number, and the estimated bit number is the number of bits required for encoding the current block to be encoded which is predicted in the state of the code stream buffer; the second operation refers to increasing the estimated quantization parameter by a reference quantization parameter; the reference quantization parameter is determined based on the penalty bit number indicated by the penalty parameter; performing encoding on the current block to be encoded based on the target quantization parameter obtained after the second operation has been performed.

In some possible embodiments, the code stream buffer includes a main buffer and an additional buffer; the main buffer and the additional buffer are different physical storage partitions or different logical storage partitions.

In other possible embodiments, the processing module 1302 is specifically configured for determining a size of an available buffer based on the state of the code stream buffer; wherein the size of the available buffer is configured to characterize a predicted available size of the code stream buffer after the current block to be encoded is encoded by using the estimated bit number; acquiring an additional buffer threshold; wherein the additional buffer threshold is configured to characterize an available space in the additional buffer; in response to the size of the available buffer being smaller than the additional buffer threshold, performing the second operation on the estimated bit number of the current block to be encoded.

In yet some possible embodiments, the penalty parameter includes a first penalty parameter; the processing module 1302 is specifically configured for in response to the current block to be encoded being an ending block of a slice where the current block to be encoded is located, determining the additional buffer threshold based on a difference between an initial size of the additional buffer and a reference product; wherein the ending block is a block to be encoded which needs to be filled with preset placeholder bits; the reference product is a product of a reference ranking and the first penalty parameter; the reference ranking is a ranking of the current block to be encoded in the ending blocks; the first penalty parameter is a value by which the additional buffer threshold decreases every time the reference ranking is increased by one block to be encoded.

In yet some possible embodiments, in response to the current block to be encoded being a block to be encoded other than the ending block, the additional buffer threshold is set to the initial size of the additional buffer.

In yet some possible embodiments, before acquiring the additional buffer threshold, the acquiring module 1301 is further configured for acquiring the number of ending blocks; the processing module 1302 is further configured for determining the first penalty parameter based on the initial size of the additional buffer and the number of the ending blocks.

In yet some possible embodiments, the processing module 1302 is specifically configured for determining an initial size of the additional buffer as the additional buffer threshold.

In yet some possible embodiments, the processing module 1302 is specifically configured for acquiring estimated bit numbers of M blocks to be encoded before the current block to be encoded; determining the size of the available buffer based on a sum of the state of the code stream buffer and a reference variation value; wherein the reference variation value is a difference between a fixed outflow bit number of M+1 blocks in the code stream buffer and an estimated inflow bit number of the M+1 blocks in the code stream buffer; the fixed outflow bit number of the M+1 blocks in the code stream buffer is a product of a number of pixel points of each of blocks to be encoded, a preset pixel depth and M+1; the estimated inflow bit number of the M+1 blocks in the code stream buffer is a sum of the estimated bit number of the current block to be encoded and respective estimated bit numbers of M blocks to be encoded before the current block to be encoded.

In yet some possible embodiments, for a historical block, the historical block is any one of the M blocks to be encoded before the current block to be encoded, and the processing module 1302 is specifically configured for acquiring a complexity level of the historical block and a complexity level of the current block to be encoded; determining an estimated bit number of the historical block based on a quotient of the complexity level of the historical block and a reference value; wherein the reference value is a product of the complexity level of the current block to be encoded and the estimated bit number of the current block to be encoded.

In yet some possible embodiments, the penalty parameter further includes a second penalty parameter; which is the number of blocks to be encoded that is expected to consume the number of bits in the additional buffer; before performing the second operation on the estimated quantization parameter of the current block to be encoded, the acquiring module 1301 is further configured for acquiring the number of remaining blocks to be encoded in the slice where the current block to be encoded is located; wherein in response to the number of the remaining blocks to be encoded being less than the second penalty parameter, in the second operation performed on the estimated quantization parameter of the current block to be encoded, the penalty bit number indicated by the penalty parameter is a product of the number of the current remaining blocks to be encoded and a preset pixel depth.

In yet some possible embodiments, in response to the number of the current remaining blocks to be encoded being greater than the second penalty parameter, in the second operation performed on the estimated quantization parameter of the current block to be encoded, the penalty bit number indicated by the penalty parameter is a product of the second penalty parameter and the preset pixel depth.

In an exemplary embodiment, the embodiment of the present application further provides another image decoding device. Fig. 14 is a schematic diagram of a composition of another image decoding device provided by an embodiment of the present application. As shown in Fig. 14, the device includes an acquiring module 1401 and a processing module 1402.

The acquiring module 1401 is configured for acquiring a state of a code stream buffer; wherein the code stream buffer is configured for storing a code stream obtained after a block to be decoded is decoded; the state of the code stream buffer is a number of bits in the code stream buffer after a M-th block to be decoded counted backward from the current block to be decoded is decoded; M is a positive integer.

The processing module 1402 is configured for in response to the state of the code stream buffer satisfying a preset conditions, performing a second operation on the estimated quantization parameter of the current block to be decoded, so as to obtain a target quantization parameter of the current block to be decoded; wherein the estimated quantization parameter is obtained based on the estimated bit number, and the estimated bit number is the number of bits required for decoding the current block to be decoded which is predicted in the state of the code stream buffer; the second operation refers to increasing the estimated quantization parameter by a reference quantization parameter; the reference quantization parameter is determined based on the penalty bit number indicated by the penalty parameter; performing decoding on the current block to be decoded based on the target quantization parameter obtained after the second operation has been performed.

In some possible embodiments, the code stream buffer includes a main buffer and an additional buffer; the main buffer and the additional buffer are different physical storage partitions or different logical storage partitions.

In other possible embodiments, the processing module 1402 is specifically configured for determining a size of an available buffer based on the state of the code stream buffer; wherein the size of the available buffer is configured to characterize a predicted available size of the code stream buffer after the current block to be decoded is decoded by using the estimated bit number; acquiring an additional buffer threshold; wherein the additional buffer threshold is configured to characterize an available space in the additional buffer; in response to the size of the available buffer being smaller than the additional buffer threshold, performing the second operation on the estimated quantization parameter of the current block to be decoded.

In yet some possible embodiments, the processing module 1402 is specifically configured for in response to the current block to be decoded being an ending block of a slice where the current block to be decoded is located, determining the additional buffer threshold based on a difference between an initial size of the additional buffer and a reference product; wherein the ending block is a block to be decoded which needs to be filled with preset placeholder bits; the reference product is a product of a reference ranking and the first penalty parameter; the reference ranking is a ranking of the current block to be decoded in the ending blocks; the first penalty parameter is a value by which the additional buffer threshold decreases every time the reference ranking is increased by one block to be encoded.

In yet some possible embodiments, in response to the current block to be decoded being a block to be decoded other than the ending block, the additional buffer threshold is set to the initial size of the additional buffer.

In yet some possible embodiments, before acquiring the additional buffer threshold, the processing module 1402 is further configured for parsing a code stream stored in the code stream buffer to obtain the first penalty parameter.

In yet some possible embodiments, the processing module 1402 is specifically configured for determining an initial size of the additional buffer as the additional buffer threshold.

In yet some possible embodiments, the processing module 1402 is specifically configured for acquiring the estimated bit numbers of M blocks to be decoded before the current block to be decoded; determining the size of the available buffer based on a sum of the state of the code stream buffer and a reference variation value; wherein the reference variation value is a difference between a fixed inflow bit number of M+1 blocks in the code stream buffer and an estimated outflow bit number of M+1 blocks in the code stream buffer; the fixed inflow bit number of the M+1 blocks in the code stream buffer is a product of the number of pixel points of each block to be decoded, a preset pixel depth and M+1; the estimated outflow bit number of the M+1 blocks in the code stream buffer is a sum of an estimated bit number of the current block to be decoded and the estimated bit number of each of M blocks to be decoded before the current block to be decoded.

In yet some possible embodiments, for a historical block, the historical block is any one of the M blocks to be decoded before the current block to be decoded, and the processing module 1402 is specifically configured for acquiring a complexity level of the historical block and a complexity level of the current block to be decoded; determining an estimated bit number of the historical block based on a quotient of the complexity level of the historical block and a reference value; wherein the reference value is a product of the complexity level of the current block to be decoded and the estimated bit number of the current block to be decoded.

In yet some possible embodiments, the penalty parameter further includes a second penalty parameter, which is the number of blocks to be decoded that is expected to consume the number of bits in the additional buffer; before performing the second operation on the estimated quantization parameter of the current block to be decoded, the processing module 1402 is further configured for parsing the code stream stored in the code stream buffer to obtain the second penalty parameter; acquiring the number of remaining blocks to be decoded in the slice where the current block to be decoded is located; wherein in response to the number of the remaining blocks to be decoded being less than the second penalty parameter, in the second operation performed on the estimated quantization parameter of the current block to be decoded, the penalty bit number indicated by the penalty parameter is a product of the number of the current remaining blocks to be decoded and a preset pixel depth.

In yet some possible embodiments, in response to the number of the currently remaining blocks to be decoded being greater than the second penalty parameter, in the second operation performed on the estimated quantization parameter of the current block to be decoded, the penalty bit number indicated by the penalty parameter is a product of the second penalty parameter and the preset pixel depth.

It should be noted that the division of modules in Fig. 11, Fig. 12, Fig. 13 and Fig. 14 is schematic, and is only a logical function division, and there may be other division ways in actual implementation. For example, two or more functions can also be integrated in one processing module. The above integrated modules can be realized either in the form of hardware or in the form of software functional modules.

In an exemplary embodiment, an embodiment of the present application further provides a readable storage medium containing execution instructions, which, when run on an image encoding and decoding device, cause the image encoding and decoding device to execute any one of the methods provided in the above embodiments.

In an exemplary embodiment, an embodiment of the present application further provides a computer program product containing execution instructions, which, when run on an image encoding and decoding device, cause the image encoding and decoding device to execute any one of the methods provided in the above embodiments.

The above embodiments can be implemented in whole or in part by software, hardware, firmware or any combination thereof. When implemented in software program, it can be implemented in whole or in part in the form of a computer program product. The computer program product includes one or more computer-executable instructions. When computer-executable instructions are loaded and executed on a computer, the processes or functions described in the embodiments of the present application are generated in whole or in part. The computer can be a general-purpose computer, a special-purpose computer, a computer network, or other programmable devices. The computer-executable instructions can be stored in a computer-readable storage medium or transmitted from one computer-readable storage medium to another computer-readable storage medium. For example, the computer-executable instructions can be transmitted from a website, computer, server or data center to another website, computer, server or data center by wired (such as coaxial cable, optical fiber, digital subscriber line (DSL)) or wireless (such as infrared, wireless, microwave, etc.). The computer-readable storage medium can be any available media that computers can be accessed by or a data storage device such as a server and a data center and the like that includes an integration of one or more available medium. The available medium may be magnetic medium (such as a floppy disk, a hard disk, a magnetic tape), optical medium (such as DVD), or semiconductor medium (such as Solid State Disk (SSD)) and the like.

Although the present application has been described herein in combination with various embodiments, in the process of implementing the claimed application, those skilled in the art can understand and realize other variations of the disclosed embodiments by reviewing the drawings, the disclosure and the appended claims. In the claims, the word "comprising" does not exclude other components or steps, and "a" or "an" does not exclude plural cases. A single processor or other unit can realize several functions recited in the claims. Certain measures are recorded in mutually different dependent claims, but this does not mean that these measures cannot be combined to produce good results.

Although the present application has been described in combination with specific features and embodiments thereof, it is obvious that various modifications and combinations can be made without departing from the spirit and scope of the present application. Accordingly, the description and drawings are merely illustrative of the present application as defined by the appended claims, and are deemed to cover any and all modifications, variations, combinations or equivalents within the scope of the present application. Obviously, various modifications and variations can be made to the present application by those skilled in the art without departing from the spirit and scope of the present application. Thus, if these modifications and variations of the present application fall within the scope of the claims of the present application and their technical equivalents, the present application is also intended to include these modifications and variations.

The above are only the specific implementations of the present application, but the protection scope of the present application is not limited to this, and any change or replacement within the technical scope disclosed in the present application should be covered by the present application. Therefore, the protection scope of the present application should be subject to the protection scope of the claims.

**Claims**

1. An image encoding method, wherein the method comprises:

   acquiring a state of a code stream buffer; wherein the code stream buffer is configured for storing a code stream obtained after a block to be encoded is encoded; the state of the code stream buffer is a number of bits in the code stream buffer after a M-th block to be encoded counted backward from a current block to be encoded is encoded; M is a positive integer;
   in response to the state of the code stream buffer satisfying a preset condition, performing a first operation on an estimated bit number of the current block to be encoded; wherein the estimated bit number is a number of bits required for encoding the current block to be encoded which is predicted in the state of the code stream buffer; the first operation refers to reducing the estimated bit number by a penalty bit number; the penalty bit number is obtained based on a penalty parameter; the estimated quantization parameter is obtained based on the estimated bit number;
   performing encoding on the current block to be encoded based on an estimated bit number after the first operation has been performed.

2. The method according to claim 1, wherein the code stream buffer comprises a main buffer and an additional buffer; the main buffer and the additional buffer are different physical storage partitions or different logical storage partitions.

3. The method according to claim 2, wherein in response to the state of the code stream buffer satisfying the preset condition, performing the first operation on the estimated bit number of the current block to be encoded comprises:

determining a size of an available buffer based on the state of the code stream buffer; wherein the size of the available buffer is configured to characterize a predicted available size of the code stream buffer after the current block to be encoded is encoded by using the estimated bit number;
acquiring an additional buffer threshold; wherein the additional buffer threshold is configured to characterize an available space of the additional buffer;
in response to the size of the available buffer being smaller than the additional buffer threshold, performing the first operation on the estimated bit number of the current block to be encoded.

4. The method according to claim 3, wherein the penalty parameter comprises a first penalty parameter; acquiring the additional buffer threshold comprises:
in response to the current block to be encoded being an ending block of a slice where the current block to be encoded is located, determining the additional buffer threshold based on a difference between an initial size of the additional buffer and a reference product; wherein the ending block is a block to be encoded which needs to be filled with preset placeholder bits; the reference product is a product of a reference ranking and the first penalty parameter; the reference ranking is a ranking of the current block to be encoded in ending blocks; the first penalty parameter is a value by which the additional buffer threshold decreases every time the reference ranking is increased by one block to be encoded.

5. The method according to claim 4, wherein in response to the current block to be encoded being a block to be encoded other than the ending block, the additional buffer threshold is set to the initial size of the additional buffer.

6. The method according to claim 4, wherein, before acquiring the additional buffer threshold, the method further comprises:

acquiring a number of the ending blocks;
determining the first penalty parameter based on the initial size of the additional buffer and the number of the ending blocks.

7. The method according to claim 3, wherein acquiring the additional buffer threshold comprises:
determining an initial size of the additional buffer as the additional buffer threshold.

8. The method according to any one of claims 4 to 7, wherein the penalty parameter further comprises a second penalty parameter; the second penalty parameter is a number of blocks to be encoded that is expected to consume a number of bits in the additional buffer; before performing the first operation on the estimated bit number of the current block to be encoded, the method further comprises:

acquiring a number of remaining blocks to be encoded in the slice where the current block to be encoded is located;
wherein in response to the number of the remaining blocks to be encoded being less than the second penalty parameter, in the first operation performed on the estimated bit number of the current block to be encoded, the penalty bit number is a product of the number of the remaining blocks to be encoded and a preset pixel depth.

9. The method according to claim 8, wherein in response to the number of the remaining blocks to be encoded being greater than the second penalty parameter, in the first operation performed on the estimated bit number of the currently blocks to be encoded, the penalty bit number is a product of the second penalty parameter and the preset pixel depth.

10. An image encoding method, wherein the method comprises:

acquiring a state of a code stream buffer; wherein the code stream buffer is configured for storing a code stream obtained after a block to be encoded is encoded; the state of the code stream buffer is a number of bits in the code stream buffer after a M-th block to be encoded counted backward from a current block to be encoded is encoded; M is a positive integer;
in response to the state of the code stream buffer satisfying a preset condition, performing a first operation on an estimated bit number of the current block to be encoded; wherein the estimated bit number is a number of bits required for encoding the current block to be encoded which is predicted in the state of the code stream buffer; the first operation refers to reducing the estimated bit number by a penalty bit number; the penalty bit number is obtained based on a penalty parameter; the estimated quantization parameter is obtained based on the estimated bit number;

determining a quantization parameter of the current block to be encoded based on an estimated bit number after the first operation has been performed, and performing encoding on the current block to be encoded based on the quantization parameter.

11. The method according to claim 10, wherein the method comprises determining a size of an available buffer based on the state of the code stream buffer comprising:

acquiring estimated bit numbers of M blocks to be encoded before the current block to be encoded;
determining the size of the available buffer based on a sum of the state of the code stream buffer and a reference variation value; wherein the reference variation value is a difference between a fixed outflow bit number of M+1 blocks in the code stream buffer and an estimated inflow bit number of the M+1 blocks in the code stream buffer; the fixed outflow bit number of the M+1 blocks in the code stream buffer is a product of a number of pixel points of each block to be encoded, a preset pixel depth and M+1; the estimated inflow bit number of the M+1 blocks in the code stream buffer is a sum of the estimated bit number of the current block to be encoded and respective estimated bit numbers of M blocks to be encoded before the current block to be encoded.

12. The method according to claim 11, wherein for a historical block which is any one of the M blocks to be encoded before the current block to be encoded, acquiring the estimated bit numbers of the M blocks to be encoded before the current block to be encoded comprises:

acquiring a complexity level of the historical block and a complexity level of the current block to be encoded;
determining an estimated bit number of the historical block based on a quotient of the complexity level of the historical block and a reference value; wherein the reference value is a product of the complexity level of the current block to be encoded and the estimated bit number of the current block to be encoded.

13. The method according to claim 12, wherein acquiring the complexity level of the current block to be encoded comprises:

acquiring a current block to be encoded comprising three channels;
acquiring complexity information of encoding blocks of each channel of the three channels; wherein the complexity information is configured to characterize a degree of a difference in pixel values of the encoding blocks of each channel;
determining the complexity level of the current block to be encoded based on complexity levels of the encoding blocks of each channel.

14. The method according to claim 13, wherein the method further comprises:
revising quantization parameters of the three channels based on complexity information of a first channel; wherein the first channel is any one of the three channels.

15. The method according to any one of claims 10 to 13, wherein performing encoding on the current block to be encoded based on the quantization parameter comprises:

performing parsing based on a prediction mode and the quantization parameter to obtain a residual coefficient;
obtaining predicted values of individual pixel points of the current block to be decoded based on the prediction mode;
performing encoding to obtain residual values of the individual pixel points of the current block to be encoded based on the residual coefficient;
performing encoding on the current block to be encoded based on the predicted values and the residual values of the individual pixel points of the current block to be encoded.

16. The method according to claim 15, wherein the prediction mode is an anti-expansion mode, and the anti-expansion mode is a mode with a largest bit cost among all prediction modes.

17. The method according to claim 16, wherein the method further comprises:

performing encoding on blocks to be encoded of a luminance channel, blocks to be encoded of a first chrominance channel, and blocks to be encoded of a second chrominance channel based on a bit depth of the luminance channel according to the anti-expansion mode.

18. The method according to any one of claims 10 to 13, wherein performing encoding on the current block to be encoded is based on an anti-expansion mode, which comprises:
initializing a WarmUp array of a code control, an EndTargetFullness parameter and an ExtraBufferThreshold parameter before encoding a slice where the current block to be encoded is located.

19. An image decoding method, wherein the method comprises:

acquiring a state of a code stream buffer; wherein the code stream buffer is configured for storing a code stream obtained after a block to be decoded is decoded; the state of the code stream buffer is a number of bits in the code stream buffer after a M-th block to be decoded counted backward from a current block to be decoded is decoded; M is a positive integer;
in response to the state of the code stream buffer satisfying a preset condition, performing a first operation on an estimated bit number of the current block to be decoded; wherein the estimated bit number is a number of bits required for decoding the current block to be decoded which is predicted in the state of the code stream buffer; the first operation refers to reducing the estimated bit number by a penalty bit number; the penalty bit number is obtained based on a penalty parameter; the estimated quantization parameter is obtained based on the estimated bit number;
performing decoding on the current block to be decoded based on an estimated bit number after the first operation has been performed.

20. The method according to claim 19, wherein the code stream buffer comprises a main buffer and an additional buffer; the main buffer and the additional buffer are different physical storage partitions or different logical storage partitions.

21. The method according to claim 20, wherein in response to the state of the code stream buffer satisfying the preset condition, performing the first operation on the estimated bit number of the current block to be decoded comprises:

determining a size of an available buffer based on the state of the code stream buffer; wherein the size of the available buffer is configured to characterize a predicted available size of the code stream buffer after the current block to be decoded is decoded by using the estimated bit number;
acquiring an additional buffer threshold; wherein the additional buffer threshold is configured to characterize an available space of the additional buffer;
in response to the size of the available buffer being smaller than the additional buffer threshold, performing the first operation on the estimated bit number of the current block to be decoded.

22. The method according to claim 21, wherein the penalty parameter comprises a first penalty parameter; acquiring the additional buffer threshold comprises:
in response to the current block to be decoded being an ending block of a slice where the current block to be decoded is located, determining the additional buffer threshold based on a difference between an initial size of the additional buffer and a reference product; wherein the ending block is a block to be decoded which is filled with preset placeholder bits; the reference product is a product of a reference ranking and the first penalty parameter; the reference ranking is a ranking of the current block to be decoded in ending blocks; the first penalty parameter is a value by which the size of the additional buffer decreases every time the reference ranking is increased by one block to be decoded.

23. The method according to claim 22, wherein in response to the current block to be decoded being a block to be decoded other than the ending block, the additional buffer threshold is set to the initial size of the additional buffer.

24. The method according to claim 22, wherein, before acquiring the additional buffer threshold, the method further comprises:
parsing a code stream stored in the code stream buffer to obtain the first penalty parameter.

25. The method according to claim 21, wherein acquiring the additional buffer threshold comprises:
determining an initial size of the additional buffer as the additional buffer threshold.

26. The method according to any one of claims 22 to 25, wherein the penalty parameter further comprises a second penalty parameter; the second penalty parameter is a number of blocks to be decoded that is expected to consume a number of bits in the additional buffer; before performing the first operation on the estimated bit number of the current block to be decoded, the method further comprises:

parsing a code stream stored in the code stream buffer to obtain the second penalty parameter;
acquiring a number of remaining blocks to be decoded in the slice where the current block to be decoded is located; wherein the remaining blocks to be decoded refer to blocks to be decoded which have not been decoded yet;
wherein in response to the number of the remaining blocks to be decoded being less than the second penalty parameter, in the first operation performed on the estimated bit number of the current block to be decoded, the penalty bit number is a product of the number of the remaining blocks to be decoded and a preset pixel depth.

27. The method according to claim 26, wherein in response to the number of the remaining blocks to be decoded being greater than the second penalty parameter, in the first operation performed on the estimated bit number of the currently blocks to be decoded, the penalty bit number indicated by the penalty parameter is a product of the second penalty parameter and the preset pixel depth.

28. An image decoding method, wherein the method comprises:

acquiring a state of a code stream buffer; wherein the code stream buffer is configured for storing a code stream obtained after a block to be decoded is decoded; the state of the code stream buffer is a number of bits in the code stream buffer after a M-th block to be decoded counted backward from a current block to be decoded is decoded; M is a positive integer;
in response to the state of the code stream buffer satisfying a preset condition, performing a first operation on an estimated bit number of the current block to be decoded; wherein the estimated bit number is a number of bits required for decoding the current block to be decoded which is predicted in the state of the code stream buffer; the first operation refers to reducing the estimated bit number by a penalty bit number; the penalty bit number is obtained based on a penalty parameter; the estimated quantization parameter is obtained based on the estimated bit number;
determining a quantization parameter of the current block to be decoded based on an estimated bit number after the first operation has been performed, and performing decoding on the current block to be decoded based on the quantization parameter.

29. The method according to claim 28, wherein the method comprises determining a size of an available buffer based on the state of the code stream buffer comprising:

acquiring estimated bit numbers of M blocks to be decoded before the current block to be decoded;
determining the size of the available buffer based on a sum of the state of the code stream buffer and a reference variation value; wherein the reference variation value is a difference between a fixed inflow bit number of M+1 blocks in the code stream buffer and an estimated outflow bit number of the M+1 blocks in the code stream buffer; the fixed inflow bit number of the M+1 blocks in the code stream buffer is a product of a number of pixel points of each block to be decoded, a preset pixel depth and M+1; the estimated outflow bit number of the M+1 blocks in the code stream buffer is a sum of the estimated bit number of the current block to be decoded and respective estimated bit numbers of M blocks to be decoded before the current block to be decoded.

30. The method according to claim 29, wherein for a historical block which is any one of the M blocks to be decoded before the current block to be decoded, and acquiring the estimated bit numbers of the M blocks to be decoded before the current block to be decoded comprises:

acquiring a complexity level of the historical block and a complexity level of the current block to be decoded;
determining an estimated bit number of the historical block based on a quotient of the complexity level of the historical block and a reference value; wherein the reference value is a product of the complexity level of the current block to be decoded and the estimated bit number of the current block to be decoded.

31. The method according to claim 30, wherein acquiring the complexity level of the current block to be decoded comprises:

acquiring a current block to be decoded comprising three channels;

acquiring complexity information of decoding blocks of each channel of the three channels; wherein the complexity information is configured to characterize a degree of a difference in pixel values of the decoding blocks of each channel;

determining the complexity level of the current block to be decoded based on complexity levels of the decoding blocks of each channel.

32. The method according to claim 31, wherein the method further comprises:
revising quantization parameters of the three channels based on complexity information of a first channel; wherein the first channel is any one of the three channels.

33. The method according to any one of claims 28 to 32, wherein performing decoding on the current block to be decoded based on the quantization parameter comprises:

performing parsing based on a prediction mode and the quantization parameter to obtain a residual coefficient;

obtaining predicted values of individual pixel points of the current block to be decoded based on the prediction mode;

performing decoding to obtain residual values of the individual pixel points of the current block to be decoded based on the residual coefficient;

performing decoding on the current block to be decoded based on the predicted values and the residual values of the individual pixel points of the current block to be decoded.

34. The method according to claim 33, wherein the prediction mode is an anti-expansion mode, and the anti-expansion mode is a mode with a largest bit cost among all prediction modes.

35. The method according to claim 34, wherein the method comprises:
performing decoding on blocks to be decoded of a luminance channel, blocks to be decoded of a first chrominance channel, and blocks to be decoded of a second chrominance channel based on a bit depth of the luminance channel according to the anti-expansion mode.

36. The method according to any one of claims 28 to 32, wherein performing decoding on the current block to be decoded is based on an anti-expansion mode, which comprises:
initializing a WarmUp array of a code control, an EndTargetFullness parameter and an ExtraBufferThreshold parameter before decoding a slice where the current block to be decoded is located.

37. An image encoding device, wherein the device comprises: a processor and a memory;

the memory stores instructions executable by the processor;

the processor is configured to, when executing the instructions, cause the image encoding device to implement the method according to any one of claims 1 to 18.

38. An image decoding device, wherein the device comprises: a processor and a memory;

the memory stores instructions executable by the processor;

the processor is configured to, when executing the instructions, cause the image decoding device to implement the method according to any one of claims 19 to 36.

39. An image encoding device, wherein the device comprises:

an acquiring module, configured for acquiring a state of a code stream buffer; wherein the code stream buffer is configured for storing a code stream obtained after a block to be encoded is encoded; the state of the code stream buffer is a number of bits in the code stream buffer after a M-th block to be encoded counted backward from a current block to be encoded is encoded; M is a positive integer;

a processing module, configured for in response to the state of the code stream buffer satisfying a preset condition, performing a first operation on an estimated bit number of the current block to be encoded; wherein the estimated bit number is a number of bits required for encoding the current block to be encoded which is predicted in the state of the code stream buffer; the first operation refers to reducing the estimated bit number by a penalty bit number indicated by a penalty parameter; performing encoding on the current block to be encoded based on an estimated bit number after the first operation has been performed.

40. An image decoding device, wherein the device comprises:

an acquiring module, configured for acquiring a state of a code stream buffer; wherein the code stream buffer is configured for storing a code stream obtained after a block to be decoded is decoded; the state of the code stream buffer is a number of bits in the code stream buffer after a M-th block to be decoded counted backward from a current block to be decoded is decoded; M is a positive integer;

a processing module, configured for in response to the state of the code stream buffer satisfying a preset condition, performing a first operation on an estimated bit number of the current block to be decoded; wherein the estimated bit number is a number of bits required for decoding the current block to be decoded which is predicted in the state of the code stream buffer; the first operation refers to reducing the estimated bit number by a penalty bit number indicated by a penalty parameter; performing decoding on the current block to be decoded based on an estimated bit number after the first operation has been performed.

41. A readable storage medium, comprising: computer program instructions;

wherein the computer program instructions, when run in an image encoding and decoding device, cause the image encoding and decoding device to implement the method according to any one of claims 1 to 36.

42. An image encoding and decoding method, wherein the method comprises:

deriving an initial luminance QP and an initial chrominance QP from QPs derived by code control;

determining a final luminance QP and a final chrominance QP based on the initial luminance QP, the initial chrominance QP and a preset alignment value.

43. The method according to claim 42, wherein determining the final luminance QP and the final chrominance QP based on the initial luminance QP, the initial chrominance QP and the preset alignment value comprises:

acquiring a luminance remainder of the initial luminance QP and the preset alignment value, acquiring a chrominance remainder of the initial chrominance QP and the preset alignment value, and selecting a target QP alignment method based on the luminance remainder and the chrominance remainder;

determining the final luminance QP and the final chrominance QP based on the target QP alignment method.

44. The method according to claim 43, wherein the target alignment method comprises a first QP alignment method, wherein the first QP alignment method is to round the initial luminance QP to obtain the final luminance QP and round the initial chrominance QP to obtain the final chrominance QP.

45. The method according to claim 43, wherein the target alignment method comprises a second QP alignment method, wherein the second QP alignment method is to align the initial luminance QP downwards to obtain the final luminance QP, and round the initial chrominance QP upwards to obtain the final chrominance QP.

46. The method according to any one of claims 42 to 45, wherein the preset alignment value is 8.

47. An image encoding and decoding device, wherein the device comprises: a deriving module and a quantization/inverse quantization module;

the deriving module is configured for deriving an initial luminance QP and an initial chrominance QP from QPs derived by code control;

the quantization/inverse quantization module is configured for determining a final luminance QP and a final chrominance QP based on the initial luminance QP, the initial chrominance QP and a preset alignment value.

48. The device according to claim 47, wherein the quantization/inverse quantization module is further configured for acquiring a luminance remainder of the initial luminance QP and the preset alignment value, acquiring a chrominance remainder of the initial chrominance QP and the preset alignment value, and selecting a target QP alignment method based on the luminance remainder and the chrominance remainder;

the quantization/inverse quantization module is further configured for determining the final luminance QP and the final chrominance QP based on the target QP alignment method.

**49.** The device according to claim 48, wherein the target alignment method comprises a first QP alignment method, wherein the first QP alignment method is to round the initial luminance QP to obtain the final luminance QP and round the initial chrominance QP to obtain the final chrominance QP.

**50.** An image encoding and decoding device, wherein the device comprises: a processor and a memory;

the memory stores instructions executable by the processor;
the processor is configured to, when executing the instructions, cause the image encoding and decoding device to implement the method according to any one of claims 42 to 46.

**51.** A readable storage medium, comprising: computer program instructions;
wherein the computer program instructions, when run in an image encoding and decoding device, cause the image encoding and decoding device to implement the method according to any one of claims 42 to 46.

Start

acquiring a stats of a buffer

acquiring a complexity level

determining a lossless encoding bit number

determining an estimated bit number

updating the lossless encoding bit number

clamping the estimated bit number based on the state of the buffer and the complexity level

calculating the main quantization parameter

estimating the lossless encoding bit number based on the luminance quantization parameter, the chrominance quantization parameter and a actually encoded bit number

calculating the luminance quantization parameter and the chrominance quantization parameter

prediction, entropy encoding

End

Fig.1

video encoding and decoding system

10

source device

video source 101

video encoder 102

output interface 103

storage device 13

12

11

destination device

display device 111

video decoder 112

input interface 113

Fig.2

Fig.3

Fig.4

parallel encoding unit 1    parallel encoding unit 2

①    ①

③    ④    PG-1

PG-2

PG-3

②

independent
encoding unit

⑤    RB-1 | RB-2

image ◄

Fig.5

41    45

processor    processor

CPU0    CPU0

CPU1    CPU1

bus 43    42

memory

44

communication
interface

Fig.6

S101

acquiring, by an encoding end, a state of a code stream buffer

S102

in response to a state of the code stream buffer satisfying a preset condition, performing, by the encoding end, a first operation on an estimated bit number of the current block to be encoded

S103

performing, by the encoding end, encoding on the current block to be encoded based on the estimated bit number after the first operation has been performed

Fig.7

S201

acquiring, by the decoding end, the state of the code stream buffer

S202

in response to the state of the code stream buffer satisfying a preset condition, performing, by the decoding end, a first operation on the estimated bit number of the current block to be decoded

S203

performing, by the decoding end, decoding on the current block to be decoded based on the estimated bit number after the first operation has been performed

Fig.8

S301

acquiring, by an encoding end, a state of a code
stream buffer

S302

in response to the state of the code stream buffer satisfying
a preset conditions, performing, by the encoding end,
a second operation on the estimated quantization parameter
of the current block to be encoded, so as to obtain a target
quantization parameter of the current block to be encoded

S303

performing, by the encoding end, encoding on the current
block to be encoded based on the target quantization
parameter obtained after the second operation has been
performed

Fig. 9

S401

acquiring, by an decoding end,
a state of a code stream buffer

S402

in response to the state of the code stream buffer satisfying
a preset condition, performing, by the decoding end,
a second operation on the estimated quantization parameter
of the current block to be decoded to obtain a target
quantization parameter of the current block to be decoded

S403

performing, by the decoding end, decoding on the current
block to be decoded based on the target quantization
parameter obtained after the second operation has been
performed

Fig. 10

image encoding device

acquiring module
1101

processing module
1102

Fig.11

image decoding device

acquiring module
1201

processing module
1202

Fig.12

image encoding device

acquiring module
1301

processing module
1302

Fig.13

image decoding device

acquiring module
1401

processing module
1402

Fig.14

## INTERNATIONAL SEARCH REPORT

| | International application No. |
|---|---|
| | **PCT/CN2023/131803** |

| A. | CLASSIFICATION OF SUBJECT MATTER |
|---|---|

H04N19/146(2014.01)i; H04N19/176(2014.01)i; H04N19/124(2014.01)i; H04N19/184(2014.01)i

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, CNKI, CJFD, DWPI, WPABS, VCN, IEEE: 缓冲区, 缓存区, 块, 比特, 量化参数, 亮度, 码率, 偏移, 偏置, 取整, 色度, 上溢, 溢出, 余数, QP, buffer?, block, bit, quantization 1w parameter, luma, code 1w rate, offset, bias, round, chroma, overflow, remainder

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113132726 A (SHANGHAI HISILICON TECHNOLOGY CO., LTD.) 16 July 2021 (2021-07-16) <br> description, paragraphs 73-338 | 1-3, 10, 15-21, 28, 33-41 |
| X | CN 112740683 A (INTERDIGITAL VC HOLDINGS, INC.) 30 April 2021 (2021-04-30) <br> description, paragraphs 34-134 | 42, 47, 50, 51 |
| A | US 6865224 B1 (SNELL & WILCOX LTD.) 08 March 2005 (2005-03-08) <br> entire document | 1-51 |
| A | CN 108200431 A (CHONGQING UNIVERSITY OF POSTS AND TELECOMMUNICATIONS) 22 June 2018 (2018-06-22) <br> entire document | 1-51 |
| A | CN 110870311 A (HUAWEI TECHNOLOGIES CO., LTD.) 06 March 2020 (2020-03-06) <br> entire document | 1-51 |
| A | CN 114026858 A (SHARP CORP.) 08 February 2022 (2022-02-08) <br> entire document | 1-51 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 January 2024** | **17 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 622 257 A1

## INTERNATIONAL SEARCH REPORT

International application No.

**PCT/CN2023/131803**

### C. DOCUMENTS CONSIDERED TO BE RELEVANT

| Category* | Citation of document, with indication, where appropriate, of the relevant passages | Relevant to claim No. |
|---|---|---|
| PX | CN 116132679 A (HANGZHOU HIKVISION DIGITAL TECHNOLOGY CO., LTD.) 16 May 2023 (2023-05-16) description, paragraphs 76-538 | 1-51 |
| PX | CN 116684609 A (HANGZHOU HIKVISION DIGITAL TECHNOLOGY CO., LTD.) 01 September 2023 (2023-09-01) description, paragraphs 77-539 | 1-51 |
| PX | CN 116760987 A (HANGZHOU HIKVISION DIGITAL TECHNOLOGY CO., LTD.) 15 September 2023 (2023-09-15) description, paragraphs 77-539 | 1-51 |

## INTERNATIONAL SEARCH REPORT

| International application No. |
|---|
| **PCT/CN2023/131803** |

**Box No. III      Observations where unity of invention is lacking (Continuation of item 3 of first sheet)**

This International Searching Authority found multiple inventions in this international application, as follows:

Independent claims 1, 10, 19, 28, 39 and 40 all relate to a coding and decoding method or device, and mainly relate to obtaining the state of a code stream buffer area, comprising: when the state of the code stream buffer area meets a preset condition, executing a first operation on an estimated bit number of a current block to be coded, wherein the estimated bit number is a bit number required for encoding the current block to be coded in the state of the code stream buffer area; the first operation refers to reducing a penalty bit number from the estimated bit number; the penalty bit number is obtained on the basis of a penalty parameter; and the estimated quantization parameter is obtained on the basis of the estimated bit number.

Independent claims 42 and 47 mainly relate to deriving an initial brightness QP and an initial chroma QP from a code-controlled derived QP; and according to the initial brightness QP, the initial chroma QP and a preset alignment value, determining a final brightness QP and a final chroma QP.

It can be seen that the two inventions do not belong to a single general inventive concept and do not have a same or corresponding special technical feature; therefore, the two inventions lack unity of invention, and do not comply with PCT Rule 13.1, 13.2 and 13.3.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/CN2023/131803**

| Patent document cited in search report | | | Publication date (day/month/year) | Patent family member(s) | | | Publication date (day/month/year) |
|---|---|---|---|---|---|---|---|
| CN | 113132726 | A | 16 July 2021 | None | | | |
| CN | 112740683 | A | 30 April 2021 | US | 2022038704 | A1 | 03 February 2022 |
| | | | | KR | 20210062070 | A | 28 May 2021 |
| | | | | EP | 3857883 | A1 | 04 August 2021 |
| | | | | JP | 2022502981 | A | 11 January 2022 |
| | | | | IL | 281542 | A | 31 May 2021 |
| | | | | WO | 2020068531 | A1 | 02 April 2020 |
| US | 6865224 | B1 | 08 March 2005 | ATE | 272926 | T1 | 15 August 2004 |
| | | | | EP | 1157560 | A1 | 28 November 2001 |
| | | | | EP | 1157560 | B1 | 04 August 2004 |
| | | | | DE | 60012702 | D1 | 09 September 2004 |
| | | | | DE | 60012702 | T2 | 28 July 2005 |
| | | | | WO | 0045605 | A1 | 03 August 2000 |
| | | | | AU | 2120400 | A | 18 August 2000 |
| | | | | GB | 9901936 | D0 | 17 March 1999 |
| | | | | GB | 2346282 | A | 02 August 2000 |
| | | | | GB | 2346282 | B | 19 February 2003 |
| CN | 108200431 | A | 22 June 2018 | None | | | |
| CN | 110870311 | A | 06 March 2020 | EP | 3646591 | A4 | 06 May 2020 |
| | | | | WO | 2019011245 | A1 | 17 January 2019 |
| | | | | US | 2019020875 | A1 | 17 January 2019 |
| | | | | US | 11019339 | B2 | 25 May 2021 |
| CN | 114026858 | A | 08 February 2022 | US | 2022377338 | A1 | 24 November 2022 |
| | | | | EP | 3987810 | A1 | 27 April 2022 |
| | | | | EP | 3987810 | A4 | 19 April 2023 |
| | | | | WO | 2020262176 | A1 | 30 December 2020 |
| CN | 116132679 | A | 16 May 2023 | None | | | |
| CN | 116684609 | A | 01 September 2023 | None | | | |
| CN | 116760987 | A | 15 September 2023 | None | | | |

Form PCT/ISA/210 (patent family annex) (July 2022)

**REFERENCES CITED IN THE DESCRIPTION**

**Patent documents cited in the description**

- CN 202211448399